(19) Europäisches Patentamt European Patent Office Office européen des brevets

(11) **EP 4 046 329 B1**

(12) **EUROPEAN PATENT SPECIFICATION**

(45) Date of publication and mention of the grant of the patent:
**30.08.2023 Bulletin 2023/35**

(21) Application number: **20808191.9**

(22) Date of filing: **03.11.2020**

(51) International Patent Classification (IPC):
**H04L 9/00** *(2022.01)*     **H04L 9/32** *(2006.01)*

(52) Cooperative Patent Classification (CPC):
**H04L 9/3239; H04L 9/50**

(86) International application number:
**PCT/IB2020/060295**

(87) International publication number:
**WO 2021/105795 (03.06.2021 Gazette 2021/22)**

(54) **PROVABLY FAIR GAMES USING A BLOCKCHAIN**

NACHWEISBAR FAIRE SPIELE MIT EINER BLOCKCHAIN

JEUX DONT L'ÉQUITÉ PEUT ÊTRE ATTESTÉE À L'AIDE D'UNE CHAÎNE DE BLOCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2019 GB 201917284**

(43) Date of publication of application:
**24.08.2022 Bulletin 2022/34**

(60) Divisional application:
**23183830.1 / 4 231 585**

(73) Proprietor: **nChain Licensing AG**
**6300 Zug (CH)**

(72) Inventors:
• **DAVIES, Jack Owen**
  **London W1W 8AP (GB)**
• **TARTAN, Chloe**
  **London W1W 8AP (GB)**
• **WRIGHT, Craig Steven**
  **London W1W 8AP (GB)**

(74) Representative: **Page White Farrer**
**Bedford House**
**21a John Street**
**London WC1N 2BF (GB)**

(56) References cited:
**US-A1- 2019 130 698**

• **ZHIFENG JIA ET AL: "DeLottery: A Novel Decentralized Lottery System Based on Blockchain Technology", ARXIV.ORG, CORNELL UNIVERSITY LIBRARY, 201 OLIN LIBRARY CORNELL UNIVERSITY ITHACA, NY 14853, 6 November 2019 (2019-11-06), XP081526212,**
• **ALISA CHERNYAEVA ET AL: "Game Channels: State Channels for the Gambling Industry with Built-In PRNG", IACR, INTERNATIONAL ASSOCIATION FOR CRYPTOLOGIC RESEARCH , vol. 20190410:002020 4 April 2019 (2019-04-04), pages 1-27, XP061032042, Retrieved from the Internet: URL:http://eprint.iacr.org/2019/362.pdf[retrieved on 2019-04-04]**
• **LIAO DA-YIN ET AL: "Design of a Blockchain-Based Lottery System for Smart Cities Applications", 2017 IEEE 3RD INTERNATIONAL CONFERENCE ON COLLABORATION AND INTERNET COMPUTING (CIC), IEEE, 15 October 2017 (2017-10-15), pages 275-282, XP033269768, DOI: 10.1109/CIC.2017.00044 [retrieved on 2017-12-09]**

**Description**

Technical Field

The present disclosure relates to methods for randomly selecting game elements in order to enable provably fair games to be played out using a blockchain.

Background

A blockchain refers to a form of distributed data structure, wherein a duplicate copy of the blockchain is maintained at each of a plurality of nodes in a peer-to-peer (P2P) network. The blockchain comprises a chain of blocks of data, wherein each block comprises one or more transactions. Each transaction may point back to a preceding transaction in a sequence which may span one or more blocks. Transactions can be submitted to the network to be included in new blocks by a process known as "mining", which involves each of a plurality of mining nodes competing to perform "proof-of-work", i.e. solving a cryptographic puzzle based on a pool of the pending transactions waiting to be included in blocks.

Conventionally the transactions in the blockchain are used to convey a digital asset, i.e. data acting as a store of value. However, a blockchain can also be exploited in order to lay additional functionality on top of the blockchain. For instance, blockchain protocols may allow for storage of additional user data in an output of a transaction. Modern blockchains are increasing the maximum data capacity that can be stored within a single transaction, enabling more complex data to be incorporated. For instance, this may be used to store an electronic document in the blockchain, or even audio or video data.

Each node in the network can have any one, two or all of three roles: forwarding, mining and storage. Forwarding nodes propagate transactions throughout the nodes of the network. Mining nodes perform the mining of transactions into blocks. Storage nodes each store their own copy of the mined blocks of the blockchain. In order to have a transaction recorded in the blockchain, a party sends the transaction to one of the nodes of the network to be propagated. Mining nodes which receive the transaction may race to mine the transaction into a new block. Each node is configured to respect the same node protocol, which will include one or more conditions for a transaction to be valid. Invalid transactions will not be propagated nor mined into blocks. Assuming the transaction is validated and thereby accepted onto the blockchain, the additional user data will thus remain stored at each of the nodes in the P2P network as an immutable public record.

A game of chance is a game whose outcome is strongly influenced by some randomizing device, and upon which participants may choose to wager money or anything of monetary value. Common devices used to influence the outcome of a game include dice, playing cards, roulette wheels, numbered balls drawn from a container, etc. It is common for these games to be played out online, i.e. at least some of the participants of the game are not physically located in the same place. For example, participants may play a game over the internet. Dedicated sites for hosting games online are often referred to as online casinos.

The following prior art documents disclose various methods and systems making use of blockchain technology for online games, lottery and gambling applications:

Z. Jia et al: "DeLottery: A Novel Decentralized Lottery System Based on Blockchain Technology";
United States Patent application publication US 2019/130698 A1 to J. Simons;
A. Chernyaeva et al: "Game Channels: State Channels for the Gambling Industry with Built-In PRNG";
D. Liao et al: "Design of a Blockchain-Based Lottery System for Smart Cities Applications".

Summary

A problem with online casinos (or online games in general) is the lack of transparency (and therefore trust) of the randomizing device. In other words, in a game where the outcome is to at least some extent dependent on a degree of randomness, it is usually not possible for the participants to see how the degree of randomness has been generated. The participants therefore cannot know if the game is being played fairly. This is particularly problematic when the participants are wagering (i.e. betting) on the outcome of the game. As an illustrative example, if participants are playing roulette at an online casino, the participants have to trust that the casino is fairly generating the winning position (i.e. number). Some games are decided, at least to some extent, on the basis of a particular order of game elements. One example of such games are card-based games, e.g. poker, blackjack, etc. Here, the order of playing cards in the deck of playing cards heavily influences the outcome of the game.

It would therefore be desirable to be provide a technique for evidencing the random generation of the order of game elements to be used in playing a game, in particular, a game played by multiple players. In this case the random generation will be a pseudorandom process (a deterministic process that givers statistically random results).

According to one aspect disclosed herein, there is provided a computer-implemented method of pseudo-randomly selecting game elements for use in playing a game, wherein the game is played by a set of users, wherein the game elements are used to determine an outcome of the game, and wherein the method is performed by an oracle and comprises: obtaining a set of seed data items, wherein the set of seed data items comprises one or more user seed data items generated by a respective user; obtaining a sequence of public keys; obtaining a list of game elements, wherein a total number of public keys corresponds to a total number of game elements; and generating a first output of a game transaction, wherein the first output comprises the sequence of public keys, and wherein the output comprises a script configured to generate at least one pseudorandom number, the at least one pseudorandom number being based on the set of seed data items, and wherein the script is configured to generate a list of the public keys based on the at least one pseudorandom number, wherein an order of public keys in the list of public keys differs compared to an order of public keys in the sequence of public keys.

The oracle obtains a list of game elements. The game elements have an order in the list of game elements (the order may have been generated at random). The oracle also obtains a sequence of public keys. The public keys have an order in the sequence of public keys. The oracle then, using the script within the game transaction, generates a list of the same public keys. The public keys have an order in the list of public keys (the order is decided upon by one or more pseudorandom numbers generated by the script). The order of public keys in the sequence of public keys is not the same as the order of public keys in the list of public keys. Now, each of the game elements in the list of game elements may be mapped to a respective public key in the list of public keys. Then, when the sequence of public keys is used in a game, each public key in the sequence of public keys will be mapped to a pseudo randomly selected game element. All public keys may be visible at all times, but a user does not necessarily know which game element each public key corresponds to. Private keys for public keys generated by a user are secret for that user, allowing a user to prove ownership of a game element.

Herein, a game element is used to refer to any component of a game which is used to decide the outcome of the game. For example, if a game involves the use of playing cards to decide the outcome, the playing cards are the game elements (or at least some of the game elements). If a game involves a die or dice, the faces (i.e. numbers) on the die or dice are the game elements (or at least some of them). If the game is roulette, the game elements may be numbers on the roulette wheel.

The oracle (i.e. the party responsible for introducing randomness into the game) obtains a user seed data item from each user (i.e. each player of the game), which is used to generate at least one pseudorandom number, which in turn is used to decide, at least in part, an order of game elements for playing the game. Since the users each provide their own seeds, each user can be confident that the at least one pseudorandom number has been generated fairly, and that the order of game elements has been decided fairly. Now it is not enough purely for the users to contribute to the generation of the pseudorandom number. Instead, the generation of the order of game elements based on the pseudorandom number(s) must be evidenced so that the users can check that the order has indeed been generated in accordance with any agreed upon rules. Therefore, the oracle generates a game transaction which includes a script for generating the at least one pseudorandom number, and for at least partially ordering the game elements (which are represented in script using public keys). The oracle can publish the game transaction to the blockchain and/or to the users so that the users can see how the order of game elements has been decided upon.

Brief Description of the Drawings

To assist understanding of embodiments of the present disclosure and to show how such embodiments may be put into effect, reference is made, by way of example only, to the accompanying drawings in which:

Figure 1 is a schematic block diagram of a system for implementing a blockchain;

Figure 2 schematically illustrates some examples of transactions which may be recorded in a blockchain;

Figure 3 is a schematic block diagram of another system for implementing a blockchain;

Figure 4 is a schematic block diagram of a piece of node software for processing transactions in accordance with a node protocol of an output-based model; and

Figure 5 is a schematic block diagram of a system for implementing a provably fair game using the blockchain;

Figure 6 schematically illustrates a sequence of public keys;

Figure 7 schematically illustrates the generation of a commitment transaction;

Figure 8 schematically illustrates a list of game elements mapped to a sequence of public keys;

Figure 9 schematically illustrates a Merkle tree for attesting to a list of game elements;

Figure 10 schematically illustrates a list of game elements mapped to a list of public keys;

Figure 11 schematically illustrates a process for pseudorandomly mapping game elements to public keys;

Figure 12 schematically illustrates a set of users providing user seeds to an oracle for generating a pseudorandom number;

Figure 13 schematically illustrates a process for pseudorandomly mapping game elements to public keys and for generating a Merkle tree for attesting to a list of game elements;

Figure 14 schematically illustrates a set of players committing user seeds to a commitment transaction;

Figure 15 schematically illustrates a dealer generating a game transaction for shuffling a list of public keys;

Figure 16 schematically illustrates a set of players providing inputs to a blind staking transaction;

Figure 17 schematically illustrates a dealer providing players with proof tokens representing face down cards;

Figure 18 schematically illustrates a set of players providing inputs to a pre-flop betting transaction;

Figure 19 schematically illustrates a dealer providing players with private keys representing face-up cards;

Figure 20 schematically illustrates a set of players providing inputs to a flop betting transaction;

Figure 21 schematically illustrates a dealer providing players with a private key representing a face-up card;

Figure 22 schematically illustrates a set of players providing inputs to a turn betting transaction;

Figure 23 schematically also illustrates a dealer providing players with a private key representing a face-up card;

Figure 24 schematically illustrates a set of players providing inputs to a river betting transaction;

Figure 25 schematically illustrates a showdown at a poker game;

Figure 26 schematically illustrates players providing inputs to a multiple pot pre-flop betting transaction;

Figure 27 illustrates an example execution flow of a script $<R_N>$ for generating a random number $R_N$; and

Figure 28 illustrates an example execution flow of a script $<P_{k=0}>$ for selecting a winning public key.

Detailed Description of Embodiments

**EXAMPLE SYSTEM OVERVIEW**

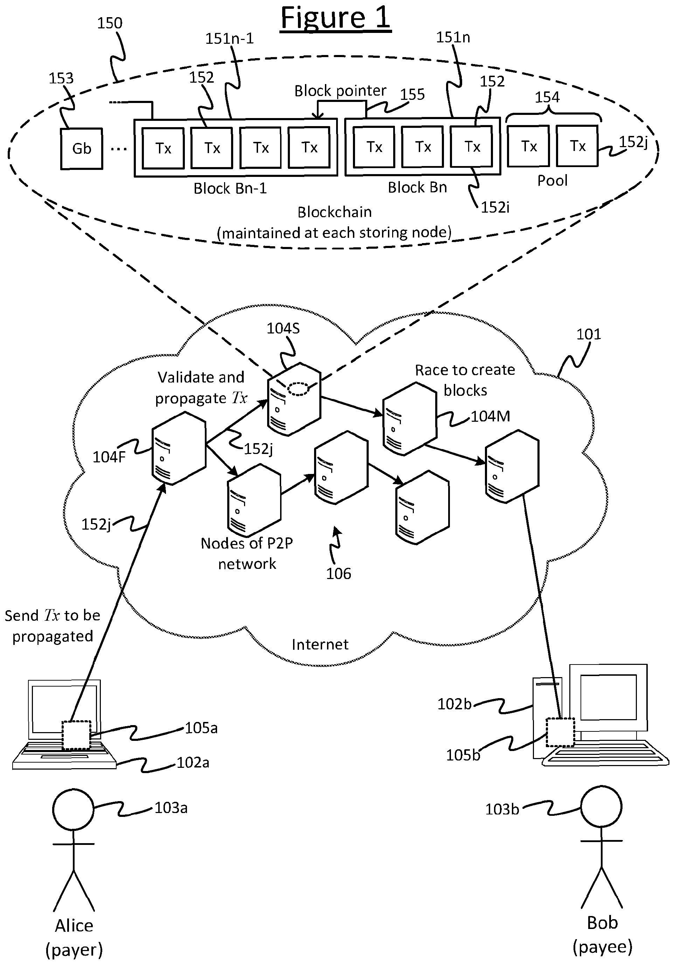

Figure 1 shows an example system 100 for implementing a blockchain 150 generally. The system 100 comprises a packet-switched network 101, typically a wide-area internetwork such as the Internet. The packet-switched network 101 comprises a plurality of nodes 104 arranged to form a peer-to-peer (P2P) overlay network 106 within the packet-switched network 101. Each node 104 comprises computer equipment of a peers, with different ones of the nodes 104 belonging to different peers. Each node 104 comprises processing apparatus comprising one or more processors, e.g. one or more central processing units (CPUs), accelerator processors, application specific processors and/or field programmable gate arrays (FPGAs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of nodes in the P2P network 160. Each block 151 in the chain comprises one or more transactions 152, wherein a transaction in this context refers to a kind of data structure. The nature of the data structure will depend on the type of transaction protocol used as part of a transaction model or scheme. A given blockchain will typically use one particular transaction protocol throughout. In one common type of transaction protocol, the data structure of each transaction 152 comprises at least one input and at least one output. Each output specifies an amount representing a quantity of a digital asset belonging to a user 103 to whom the output is cryptographically locked (requiring a signature of that user in order to be unlocked and thereby redeemed or spent). Each input points back to the output of a preceding transaction 152, thereby linking the transactions.

At least some of the nodes 104 take on the role of forwarding nodes 104F which forward and thereby propagate transactions 152. At least some of the nodes 104 take on the role of miners 104M which mine blocks 151. At least some of the nodes 104 take on the role of storage nodes 104S (sometimes also called "full-copy" nodes), each of which stores a respective copy of the same blockchain 150 in their respective memory. Each miner node 104M also maintains a pool 154 of transactions 152 waiting to be mined into blocks 151. A given node 104 may be a forwarding node 104, miner 104M, storage node 104S or any combination of two or all of these.

In a given present transaction 152j, the (or each) input comprises a pointer referencing the output of a preceding transaction 152i in the sequence of transactions, specifying that this output is to be redeemed or "spent" in the present transaction 152j. In general, the preceding transaction could be any transaction in the pool 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the signature of the user 103a to whom the output of the preceding transaction 152i is locked. In turn, the output of the present transaction 152j can be cryptographically locked to a new user 103b. The present transaction 152j can thus transfer the amount defined in the input of the preceding transaction 152i to the new user 103b as defined in the output of the present transaction 152j. In some cases a transaction 152 may have multiple outputs to split the input amount between multiple users (one of whom could be the original user 103a in order to give change). In some cases a transaction can also have multiple inputs to gather together the amounts from multiple outputs of one or more preceding transactions, and redistribute to one or more outputs of the current transaction.

The above may be referred to as an "output-based" transaction protocol, sometimes also referred to as an unspent transaction output (UTXO) type protocol (where the outputs are referred to as UTXOs). A user's total balance is not defined in any one number stored in the blockchain, and instead the user needs a special "wallet" application 105 to collate the values of all the UTXOs of that user which are scattered throughout many different transactions 152 in the blockchain 151.

An alternative type of transaction protocol may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored by the miners separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

With either type of transaction protocol, when a user 103 wishes to enact a new transaction 152j, then he/she sends the new transaction from his/her computer terminal 102 to one of the nodes 104 of the P2P network 106 (which nowadays are typically servers or data centres, but could in principle be other user terminals). This node 104 checks whether the transaction is valid according to a node protocol which is applied at each of the nodes 104. The details of the node protocol will correspond to the type of transaction protocol being used in the blockchain 150 in question, together forming the overall transaction model. The node protocol typically requires the node 104 to check that the cryptographic signature in the new transaction 152j matches the expected signature, which depends on the previous transaction 152i in an ordered sequence of transactions 152. In an output-based case, this may comprise checking that the cryptographic signature of the user included in the input of the new transaction 152j matches a condition defined in the output of the preceding transaction 152i which the new transaction spends, wherein this condition typically comprises at least checking that the cryptographic signature in the input of the new transaction 152j unlocks the output of the previous transaction 152i to which the input of the new transaction points. In some transaction protocols the condition may be at least partially defined by a custom script included in the input and/or output. Alternatively it could simply be a fixed by the node protocol alone, or it could be due to a combination of these. Either way, if the new transaction 152j is valid, the current node forwards it to one or more others of the nodes 104 in the P2P network 106. At least some of these nodes 104 also act as forwarding nodes 104F, applying the same test according to the same node protocol, and so forward the new transaction 152j on to one or more further nodes 104, and so forth. In this way the new transaction is propagated throughout the network of nodes 104.

In an output-based model, the definition of whether a given output (e.g. UTXO) is spent is whether it has yet been validly redeemed by the input of another, onward transaction 152j according to the node protocol. Another condition for a transaction to be valid is that the output of the preceding transition 152i which it attempts to spend or redeem has not already been spent/redeemed by another valid transaction. Again if not valid, the transaction 152j will not be propagated or recorded in the blockchain. This guards against double-spending whereby the spender tries to spend the output of the same transaction more than once. An account-based model on the other hand guards against double-spending by maintaining an account balance. Because again there is a defined order of transactions, the account balance has a single defined state at any one time.

In addition to validation, at least some of the nodes 104M also race to be the first to create blocks of transactions in a process known as mining, which is underpinned by "proof of work". At a mining node 104M, new transactions are added to a pool of valid transactions that have not yet appeared in a block. The miners then race to assemble a new valid block 151 of transactions 152 from the pool of transactions 154 by attempting to solve a cryptographic puzzle. Typically this comprises searching for a "nonce" value such that when the nonce is concatenated with the pool of transactions 154 and hashed, then the output of the hash meets a predetermined condition. E.g. the predetermined condition may be that the output of the hash has a certain predefined number of leading zeros. A property of a hash function is that it has an unpredictable output with respect to its input. Therefore this search can only be performed by brute force, thus consuming a substantive amount of processing resource at each node 104M that is trying to solve the puzzle.

The first miner node 104M to solve the puzzle announces this to the network 106, providing the solution as proof which can then be easily checked by the other nodes 104 in the network (once given the solution to a hash it is straightforward to check that it causes the output of the hash to meet the condition). The pool of transactions 154 for which the winner solved the puzzle then becomes recorded as a new block 151 in the blockchain 150 by at least some of the nodes 104 acting as storage nodes 104S, based on having checked the winner's announced solution at each such node. A block pointer 155 is also assigned to the new block 151n pointing back to the previously created block 151n-1 in the chain. The proof-of-work helps reduce the risk of double spending since it takes a large amount of effort to create a new block 151, and as any block containing a double spend is likely to be rejected by other nodes 104, mining nodes 104M are incentivised not to allow double spends to be included in their blocks. Once created, the block 151 cannot be modified since it is recognized and maintained at each of the storing nodes 104S in the P2P network 106 according to the same protocol. The block pointer 155 also imposes a sequential order to the blocks 151. Since the transactions 152 are recorded in the ordered blocks at each storage node 104S in a P2P network 106, this therefore provides an immutable public ledger of the transactions.

Note that different miners 104M racing to solve the puzzle at any given time may be doing so based on different snapshots of the unmined transaction pool 154 at any given time, depending on when they started searching for a solution. Whoever solves their respective puzzle first defines which transactions 152 are included in the next new block 151n, and the current pool 154 of unmined transactions is updated. The miners 104M then continue to race to create a block from the newly defined outstanding pool 154, and so forth. A protocol also exists for resolving any "fork" that may arise, which is where two miners 104M solve their puzzle within a very short time of one another such that a conflicting view of the blockchain gets propagated. In short, whichever prong of the fork grows the longest becomes the definitive blockchain 150.

In most blockchains the winning miner 104M is automatically rewarded with a special kind of new transaction which creates a new quantity of the digital asset out of nowhere (as opposed to normal transactions which transfer an amount of the digital asset from one user to another). Hence the winning node is said to have "mined" a quantity of the digital asset. This special type of transaction is sometime referred to as a "generation" transaction. It automatically forms part of the new block 151n. This reward gives an incentive for the miners 104M to participate in the proof-of-work race. Often a regular (non-generation) transaction 152 will also specify an additional transaction fee in one of its outputs, to further reward the winning miner 104M that created the block 151n in which that transaction was included.

Due to the computational resource involved in mining, typically at least each of the miner nodes 104M takes the form of a server comprising one or more physical server units, or even whole a data centre. Each forwarding node 104M and/or storage node 104S may also take the form of a server or data centre. However in principle any given node 104 could take the form of a user terminal or a group of user terminals networked together.

The memory of each node 104 stores software configured to run on the processing apparatus of the node 104 in order to perform its respective role or roles and handle transactions 152 in accordance with the node protocol. It will be understood that any action attributed herein to a node 104 may be performed by the software run on the processing apparatus of the respective computer equipment. Also, the term "blockchain" as used herein is a generic term that refers to the kind of technology in general, and does not limit to any particular proprietary blockchain, protocol or service.

Also connected to the network 101 is the computer equipment 102 of each of a plurality of parties 103 in the role of consuming users. These act as payers and payees in transactions but do not necessarily participate in mining or propagating transactions on behalf of other parties. They do not necessarily run the mining protocol. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application or software 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective user party 103 to create, sign and send transactions 152 to be propagated throughout the network of nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

The instance of the client application 105 on each computer equipment 102 is operatively coupled to at least one of the forwarding nodes 104F of the P2P network 106. This enables the wallet function of the client 105 to send transactions 152 to the network 106. The client 105 is also able to contact one, some or all of the storage nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. Each node 104 runs software configured to validate transactions 152 according to a node protocol, and in the case of the forwarding nodes 104F to forward transactions 152 in order to propagate them throughout the network 106. The transaction protocol and node protocol correspond to one another, and a given transaction protocol goes with a given node protocol, together implementing a given transaction model. The same transaction protocol is used for all transactions 152 in the blockchain 150 (though the transaction protocol may allow different subtypes of transaction within it). The same node protocol is used by all the nodes 104 in the network 106 (though it many handle different subtypes of transaction differently in accordance with the rules defined for that subtype, and also different nodes may take on different roles and hence implement different corresponding aspects of the protocol).

As mentioned, the blockchain 150 comprises a chain of blocks 151, wherein each block 151 comprises a set of one or more transactions 152 that have been created by a proof-of-work process as discussed previously. Each block 151 also comprises a block pointer 155 pointing back to the previously created block 151 in the chain so as to define a sequential order to the blocks 151. The blockchain 150 also comprises a pool of valid transactions 154 waiting to be included in a new block by the proof-of-work process. Each transaction 152 (other than a generation transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one of the one or more forwarding nodes 104F to which she is connected. E.g. this could be the forwarding node 104F that is nearest or best connected to Alice's computer 102. When any given node 104 receives a new transaction 152j, it handles it in accordance with the node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any storage node 104S that receives the transaction 152j will add the new validated transaction 152 to the pool 154 in the copy of the blockchain 150 maintained at that node 104S. Further, any forwarding node 104F that receives the transaction 152j will propagate the validated transaction 152 onward to one or more other nodes 104 in the P2P network 106. Since each forwarding node 104F applies the same protocol, then assuming the transaction 152j is valid, this means it will soon be propagated throughout the whole P2P network 106.

Once admitted to the pool 154 in the copy of the blockchain 150 maintained at one or more storage nodes 104, then miner nodes 104M will start competing to solve the proof-of-work puzzle on the latest version of the pool 154 including the new transaction 152 (other miners 104M may still be trying to solve the puzzle based on the old view of the pool 154, but whoever gets there first will define where the next new block 151 ends and the new pool 154 starts, and eventually someone will solve the puzzle for a part of the pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

## UTXO-BASED MODEL

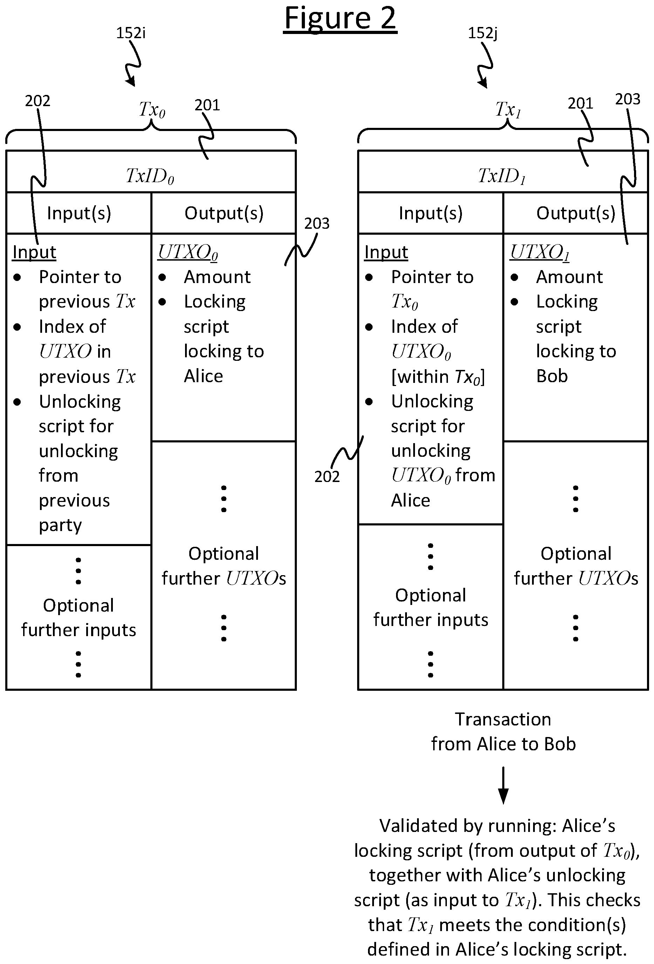

Figure 2 illustrates an example transaction protocol. This is an example of an UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this not limiting to all possible embodiments.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO specifies an amount of a digital asset (a store of value). It may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the miners 104M.

Note that whilst each output in Figure 2 is shown as a UTXO, a transaction may additionally or alternatively comprise one or more unspendable transaction outputs.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just an arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in the blockchain 150 at the time when Alice creates her new transaction $Tx_1$, or at least by the time she sends it to the network 106. It may already have been included in one of the blocks 151 at that time, or it may be still waiting in the pool 154 in which case it will soon be included in a new block 151. Alternatively $Tx_0$ and $Tx_1$ could be created and sent to the network 102 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given node 104. Nevertheless, a subsequent transaction (the descendent transaction or "child") which points to a preceding transaction (the antecedent transaction or "parent") will not be validated until and unless the parent transaction is validated. A child that arrives at a node 104 before its parent is considered an orphan. It may be discarded or buffered for a certain time to wait for the parent, depending on the node protocol and/or miner behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S). The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ comprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). What data (or "message") needs to be signed by Alice to provide a valid signature may be defined by the locking script, or by the node protocol, or by a combination of these.

When the new transaction $Tx_1$ arrives at a node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> < $P_A$> | | [Checksig $P_A$]

where "| |" represents a concatenation and "<...>" means place the data on the stack, and "[...]" is a function comprised by the unlocking script (in this example a stack-based language). Equivalently the scripts may be run one after another, with a common stack, rather than concatenating the scripts. Either way, when run together, the scripts use the public key $P_A$ of Alice, as included in the locking script in the output of $Tx_0$, to authenticate that the locking script in the input of $Tx_1$ contains the signature of Alice signing the expected portion of data. The expected portion of data itself (the "message") also needs to be included in $Tx_0$ order to perform this authentication. In embodiments the signed data comprises the whole of $Tx_0$ (so a separate element does to need to be included specifying the signed portion of data in the clear, as it is already inherently present).

The details of authentication by public-private cryptography will be familiar to a person skilled in the art. Basically, if Alice has signed a message by encrypting it with her private key, then given Alice's public key and the message in the clear (the unencrypted message), another entity such as a node 104 is able to authenticate that the encrypted version of the message must have been signed by Alice. Signing typically comprises hashing the message, signing the hash, and tagging this onto the clear version of the message as a signature, thus enabling any holder of the public key to authenticate the signature.

If the unlocking script in $Tx_1$ meets the one or more conditions specified in the locking script of $Tx_0$ (so in the example shown, if Alice's signature is provided in $Tx_1$ and authenticated), then the node 104 deems $Tx_1$ valid. If it is a mining node 104M, this means it will add it to the pool of transactions 154 awaiting proof-of-work. If it is a forwarding node 104F, it will forward the transaction $Tx_1$ to one or more other nodes 104 in the network 106, so that it will be propagated throughout the network. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the node 104 also needs to check whether the referenced UTXO in the preceding transaction $Tx_0$ is already spent (has already formed a valid input to another valid transaction). This is one reason why it is important for the blockchain 150 to impose a defined order on the transactions 152. In practice a given node 104 may maintain a separate database marking which UTXOs 203 in which transactions 152 have been spent, but ultimately what defines whether a UTXO has been spent is whether it has already formed a valid input to another valid transaction in the blockchain 150.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the winning miner, because nowadays the reward of the generation transaction alone is not typically sufficient to motivate mining. If Alice does not include a fee for the miner, $Tx_0$ will likely be rejected by the miner nodes 104M, and hence although technically valid, it will still not be propagated and included in the blockchain 150 (the miner protocol does not force miners 104M to accept transactions 152 if they don't want). In some protocols, the mining fee does not require its own separate output 203 (i.e. does not need a separate UTXO). Instead any different between the total amount pointed to by the input(s) 202 and the total amount of specified in the output(s) 203 of a given transaction 152 is automatically given to the winning miner 104. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference automatically goes to the winning miner 104M. Alternatively or additionally however, it is not necessarily excluded that a miner fee could be specified explicitly in its own one of the UTXOs 203 of the transaction 152.

Note also that if the total amount specified in all the outputs 203 of a given transaction 152 is greater than the total amount pointed to by all its inputs 202, this is another basis for invalidity in most transaction models. Therefore such transactions will not be propagated nor mined into blocks 151.

Alice and Bob's digital assets consist of the unspent UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the storage nodes 104S, e.g. the storage node 104S that is closest or best connected to the respective party's computer equipment 102.

Note that the script code is often represented schematically (i.e. not the exact language). For example, one may write [Checksig $P_A$] to mean [Checksig $P_A$] = OP_DUP OP_HASH160 <H(Pa)> OP_EQUALVERIFY OP_CHECKSIG. "OP_..." refers to a particular opcode of the Script language. OP_CHECKSIG (also called "Checksig") is a Script opcode that takes two inputs (signature and public key) and verifies the signature's validity using the Elliptic Curve Digital Signature Algorithm (ECDSA). At runtime, any occurrences of signature ('sig') are removed from the script but additional requirements, such as a hash puzzle, remain in the transaction verified by the 'sig' input. As another example, OP_RETURN is an opcode of the Script language for creating an unspendable output of a transaction that can store metadata within the transaction, and thereby record the metadata immutably in the blockchain 150. E.g. the metadata could comprise a document which it is desired to store in the blockchain.

The signature $P_A$ is a digital signature. In embodiments this is based on the ECDSA using the elliptic curve secp256k1. A digital signature signs a particular piece of data. In embodiments, for a given transaction the signature will sign part of the transaction input, and all or part of the transaction output. The particular parts of the outputs it signs depends on the SIGHASH flag. The SIGHASH flag is a 4-byte code included at the end of a signature to select which outputs are signed (and thus fixed at the time of signing).

The locking script is sometimes called "scriptPubKey" referring to the fact that it comprises the public key of the party to whom the respective transaction is locked. The unlocking script is sometimes called "scriptSig" referring to the fact that it supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

## OPTIONAL SIDE CHANNEL

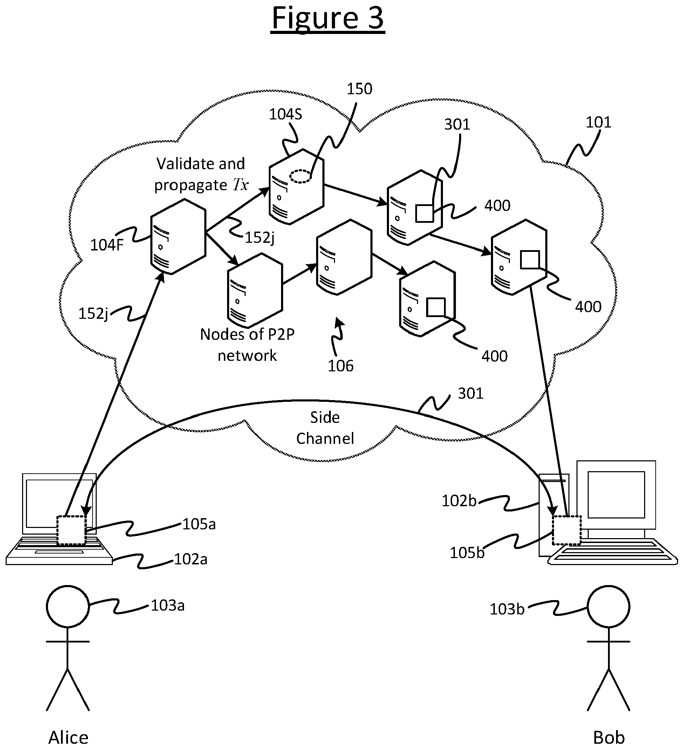

Figure 3 shows a further system 100 for implementing a blockchain 150. The system 100 is substantially the same as that described in relation to Figure 1 except that additional communication functionality is involved. The client application on each of Alice and Bob's computer equipment 102a, 120b, respectively, comprises additional communication functionality. That is, it enables Alice 103a to establish a separate side channel 301 with Bob 103b (at the instigation of either party or a third party). The side channel 301 enables exchange of data separately from the P2P network. Such communication is sometimes referred to as "off-chain". For instance this may be used to exchange a transaction 152 between Alice and Bob without the transaction (yet) being published onto the network P2P 106 or making its way onto the chain 150, until one of the parties chooses to broadcast it to the network 106. Alternatively or additionally, the side channel 301 may be used to exchange any other transaction related data, such as keys, negotiated amounts or terms, data content, etc.

The side channel 301 may be established via the same packet-switched network 101 as the P2P overlay network 106. Alternatively or additionally, the side channel 301 may be established via a different network such as a mobile cellular network, or a local area network such as a local wireless network, or even a direct wired or wireless link between Alice and Bob's devices 1021, 102b. Generally, the side channel 301 as referred to anywhere herein may comprise any one or more links via one or more networking technologies or communication media for exchanging data "off-chain", i.e. separately from the P2P overlay network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

## NODE SOFTWARE

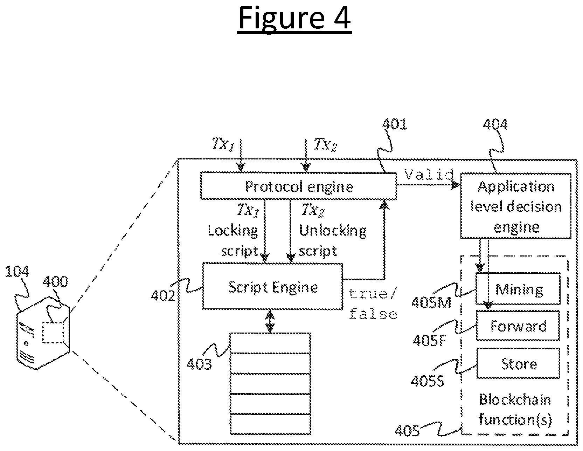

Figure 4 illustrates an example of the node software 400 that is run on each node 104 of the P2P network 106, in the example of a UTXO- or output-based model. The node software 400 comprises a protocol engine 401, a script engine 402, a stack 403, an application-level decision engine 404, and a set of one or more blockchain-related functional modules 405. At any given node 104, these may include any one, two or all three of: a mining module 405M, a forwarding module 405F and a storing module 405S (depending on the role or roles of the node). The protocol engine 401 is configured to recognize the different fields of a transaction 152 and process them in accordance with the node protocol. When a transaction 152m ($Tx_m$) is received having an input pointing to an output (e.g. UTXO) of another, preceding transaction 152m-1 ($Tx_{m-1}$), then the protocol engine 401 identifies the unlocking script in $Tx_m$ and passes it to the script engine 402. The protocol engine 401 also identifies and retrieves $Tx_{m-1}$ based on the pointer in the input of $Tx_m$. It may retrieve $Tx_{m-1}$ from the respective node's own pool 154 of pending transactions if $Tx_{m-1}$ is not already on the blockchain 150, or from a copy of a block 151 in the blockchain 150 stored at the respective node or another node 104 if $Tx_{m-1}$ is already on the blockchain 150. Either way, the script engine 401 identifies the locking script in the pointed-to output of $Tx_{m-1}$ and passes this to the script engine 402.

The script engine 402 thus has the locking script of $Tx_{m-1}$ and the unlocking script from the corresponding input of $Tx_m$. For example $Tx_1$ and $Tx_2$ are illustrated in Figure 4, but the same could apply for any pair of transactions, such as $Tx_0$ and $Tx_1$, etc. The script engine 402 runs the two scripts together as discussed previously, which will include placing data onto and retrieving data from the stack 403 in accordance with the stack-based scripting language being used (e.g. Script).

By running the scripts together, the script engine 402 determines whether the unlocking script meets the one or more criteria defined in the locking script - i.e. does it "unlock" the output in which the locking script is included? The script engine 402 returns a result of this determination to the protocol engine 401. If the script engine 402 determines that the unlocking script does meet the one or more criteria specified in the corresponding locking script, then it returns the result "true". Otherwise it returns the result "false".

In an output-based model, the result "true" from the script engine 402 is one of the conditions for validity of the transaction. Typically there are also one or more further, protocol-level conditions evaluated by the protocol engine 401 that must be met as well; such as that the total amount of digital asset specified in the output(s) of $Tx_m$, does not exceed the total amount pointed to by the input(s), and that the pointed-to output of $Tx_{m-1}$ has not already been spent by another valid transaction. The protocol engine 401 evaluates the result from the script engine 402 together with the one or more protocol-level conditions, and only if they are all true does it validate the transaction $Tx_m$. The protocol engine 401 outputs an indication of whether the transaction is valid to the application-level decision engine 404. Only on condition that $Tx_m$ is indeed validated, the decision engine 404 may select to control one or both of the mining module 405M and the forwarding module 405F to perform their respective blockchain-related function in respect of $Tx_m$. This may comprise the mining module 405M adding $Tx_m$, to the node's respective pool 154 for mining into a block 151, and/or the forwarding module 405F forwarding $Tx_m$, to another node 104 in the P2P network 106. Note however that in embodiments, while the decision engine 404 will not select to forward or mine an invalid transaction, this does not necessarily mean that, conversely, it is obliged to trigger the mining or the forwarding of a valid transaction simply because it is valid. Optionally, in embodiments the decision engine 404 may apply one or more additional conditions before triggering either or both functions. E.g. if the node is a mining node 104M, the decision engine may only select to mine the transaction on condition that the transaction is both valid and leaves enough of a mining fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model (not illustrated in Figure 4), a result of "true" could be indicated by a combination of an implicit, protocol-level) validation of a signature by the node 104 and an additional affirmative output of a smart contract (the overall result being deemed to signal true if both individual outcomes are true).

## RANDOM NUMBER GENERATION

Hash functions may be used to generate random numbers. The construction of a blockchain is typically based on the use of *hash functions,* and their inherent properties. Here a hash function H is defined as a one-way deterministic function that takes an arbitrary data structure $X$ and outputs a number with a fixed number of bits or symbols, e.g. a 256-bit number $H(X) \in \mathbb{Z}_{256}$ $Y = H(X), X \mapsto H(X)$ .

Hash functions, such as SHA-256, behave as one-way random oracles. That is to say, if a hash Y is computed from a pre-image X that is not known to a user, it is computationally difficult for the user to find X.

A property of hash functions is that the hashes of two fixed-length output data structures (e.g. the 256-bit data structures), which differ in the value of a single bit only, can be treated as completely unrelated. In other words, a hash value behaves as a true random number with respect to the user, so long as that user does not know the pre-image in its entirety.

This means that by taking a hash value $Y$ - or some function of it - it can be treated as a single random number $R$, under the assumption that no single party has control over the entire input pre-image $X$

$$R := Rand := Y = H(X) ;$$

*for unknown X.*

By extension, a random number *sequence* $S_R$ of $(k + 1)$ random values can be generated by repeatedly hashing an initial random number $R_0$ using the same arguments

$$R_0 = H(X_0); \quad R_1 = H(R_0); \quad R_k = H(R_{k-1}) ,$$

$$S_R = (R_0, R_1, ..., R_k).$$

Since hash functions are deterministic, any party may reproduce the entire sequence $S_R$ with knowledge only of the specific hash function used and the initial pre-image $X_0$, which hereby acts as a seed.

If this initial pre-image is made public at the time when the random sequence is generated, any node may independently verify that the sequence corresponds to this pre-image.

It is clear then that hash functions may be used to generate random-number sequences provided that no single party involved in generating the random number(s) can manipulate the entire initial pre-image $X_0$.

In general, the term 'hash function' is used to refer to any type of a one-way function with a fixed size output. Hash functions have existing op_codes in the Script language. However, the techniques disclosed herein are not limited to an implementation in script. Further, alternative one-way functions can be used in place of any instance of a hash function. Two examples include:

i) Elliptic Curve (EC) point multiplication - the function E(x) = $x \cdot G$ that is used to generate an EC public key from a private key, where $G$ is the elliptic curve base point and '.' is the EC point multiplication operator. This is a one-way function as it is easy to compute $E(x)$ given $x, G$ but computationally difficult to determine $x$ given $E(x), G$.

ii) The Rabin function - the function R(x) = $x^2 \, mod \, N,$ where $N = pq$ for $p, q$ both prime. It is easy to find the square $R(x)$ modulo $N,$ while finding square roots $\pm x$ given $R(x), N$ is as difficult as factoring $N$ to find $p, q,$ which is computationally hard.

The following describes three variations for generating a random number using the blockchain. Each method involves multiple parties who join to create the random number. The first method uses a combination of hash pre-images to produce a secure random number, while the second uses a combination of the s-components from several signatures. The third method is a hybrid of the two methods. Each method produces a secure random integer $R_N \in \{0, N - 1\}$.

**First method: The hash method**

Consider $N$ players each of whom make public their own hash value $Y_i = H(X_i)$, where we stipulate that each player chooses their own secret pre-image $X_i$. The properties of hash functions allow us to assume that no player can guess another's pre-image given knowledge of the public hash value.

The players then send their secret pre-image $X_i$ to an oracle (trusted third party). This may be done via a secret value distribution technique, but more generally this method to needing could use any secure channel or mechanism for communicating the pre-image to the oracle. The oracle then produces a random number $R_N$ via the following method.

Step 1. The oracle verifies that $Y_i = H(X_i)$ for the pre-image provided by each player.

The hash values have already been made public prior to the pre-images being sent to the oracle. This ensures that the oracle is fed the correct pre-images as supplied originally by each player. On the blockchain these public values are immutable, and thus cannot be changed by a player after sending the pre-image. This verification step ensures that the oracle will not proceed in generating a random number until all players have supplied it with their chosen secret pre-image.

Step 2. The oracle computes $R_N$ as

$$R_N = H\left(\sum_i X_i\right) \bmod N$$

$R_N$ is a random number with respect to each and every player provided only that no player knows all $N$ of the original pre-image values $X_i$. All of the pre-images are kept secret by the players and are communicated securely to the oracle. This means that there is no way a malicious party may know all these inputs unless they control all players involved. In this case the adversary would trivially be manipulating a random number to be used by itself only.

In all other scenarios, where there is a minimum of one genuine player, the described properties of hash functions mean that they cannot manipulate $R_N$ in an advantageous way. This is true even when the adversary controls all $N - 1$ other players. Put simply, there is no way for any party(s) to influence the random number generated by this method that can adversely affect another party.

Note that an additive '+' summation of the preimages $X_i$ may be used as this can be implemented in Script, but it is also possible to use a different operator, such as concatenation, in series analogous to the summation above.

The random number $R_N$ is generated in a way that is both (1) unpredictable to any party involved in the process and (2) reproducible via a deterministic process.

As discussed, an extension is that a random number sequence may also be generated by the oracle by repeated hashing of $R_N$.

**Second method: The signature method**

Consider a player, Alice, who wishes to create a digital signature for a message hash $H(m)$ using her private key $S_A$. Alice has a public key $P_A$ associated with her private key in the usual way according to ECC, where $G$ is the elliptic curve base point of order n

$$P_A = S_A \cdot G \,.$$

There are two components of the digital signature that need to be created: r and s. Alice generates an ephemeral key as a random number $k \in \mathbb{Z}_m^*$ and uses this to derive part r of the signature as

$$\left(R_x, R_y\right) = k \cdot G \,,$$

$$r = R_x .$$

The part s of the signature is then derived from this in combination with Alice's private key, her hashed message and the ephemeral key as

$$s = k^{-1}(H(m) + S_A * r) \bmod n.$$

By concatenating r and s a data structure known as the ECDSA digital signature of the message hash is created

$$Sig\ P_A = (r, s) .$$

Given separately the values r and s, the full signature may be constructed in script.

Now consider $N$ players each of whom make public a signature $Sig\ P_i$ as well as a random value $r_i'$ that forms part of a second signature $Sig\ P_i'$ whose s'-component is kept secret.

$$Sig\ P_i = (r_i, s_i) ,$$

$$Sig\ P_i' = (r_i', s_i') .$$

Both signatures are signed using the same private key $S_i$ such that it can be verified that both signatures correspond to the same owner of a public key $P_i$

$$P_i = S_i \cdot G .$$

The players then send their secret $s_i'$ values to an oracle, preferably via a secret-sharing technique. The oracle then produces a random number $R_N$ via the following method.

Step 1. The oracle constructs $Sig\ P_i'$ and verifies that it corresponds to the same entity as $Sig\ P_i$ for each player.

This second signature is constructed by concatenating the public $r_i'$ value with the secret $s_i'$ value using the distinguished encoding rules (DER) standard. The oracle applies the standard ECDSA signature verification algorithm to both signatures and confirms that they were commonly signed by the owner of the public key $P_i$. This ensures that another party cannot influence the random number by providing their own signature for a given $r_i'$ value.

Step 2. The oracle computes $R_N$ as

$$R_N = H\left(\sum_i s_i'\right) \bmod N$$

This inherits the same properties outlined in the hash method due to the analogy of one-way hash functions with the one-way process of generating a public key from a private key in ECC.

Replacing $Y_i \rightarrow P_i$ and $X_i \rightarrow s_i'$ provides an analody between the first and second methods.

A random number $R_N$ is generated, as with the hash method, in a way that is both unpredictable to any party involved and verifiable. It should be made clear that the signature method and the hash method are directly analogous to one another and share core properties of their respective methods for random number generation.

In particular, both methods require each user to be responsible for generating a secret value; $X_i$ and $s_i'$ for the hash and signature methods respectively. A key advantage of using the signature method here is that the act of choosing the secret is already standardised under the ECDSA procedure, while choosing an arbitrary hash pre-image is not.

In the signature method, we also have a way to directly verify the secret value $s'_i$ sent to the oracle has been provided by the original proposer of the corresponding public value $r'_i$ by comparison with the primary signature $Sig\ P_i = (r_i, s_i)$ that accompanied it. This verification is only an implicit one in the hash method.

In both regimes the random number $R_N$ has fulfilled the requirements of being both unpredictable and deterministic. The random number is also verifiable, meaning that there needs to be a way for all network peers to independently verify that $R_N$ has been generated in the correct way. This is achieved by demanding that $R_N$ itself be calculated and used in the locking script of a transaction.

In this way all the previously-secret $s'_i$ values are published on the blockchain as part of this script, meaning that anybody can verify the random number by constructing the input pre-image of a hash function $\sum_i s'_i$.

The following script may be used for generating a random integer $R_N \in \{0, N - 1\}$

$$<R_N> = <s'_1> <s'_2> ... <s'_N> \text{OP\_ADD} ... \text{OP\_ADD OP\_HASH256} <N> \text{OP\_MOD}$$, where there are $N - 1$ uses of the operator 'OP_ADD' and $N$ secret values.

Note that this script can be used for generalised secret values including hash pre-images, partial signatures and combinations of these.

The full redeem script for a transaction can include the verification that each pre-image corresponds to the correct committed hash, that each secret signature component combines with the public component to form the expected signature and that each supplied value has come from the correct player.

**Third method: The combined method**

The methods presented above are robust to malicious parties attempting to influence the outcome of the random number produced. However, there are many ways in which the hash method and signature method may be extended and combined in order to improve the security and unpredictability of the random number(s) generated.

The simplest combination of the two methods would be for each player to publish a hash value $Y_i$ as well as a signature $Sig\ P_i$, random value $r'_i$ and their public key $P_i$. The oracle may then produce a random value as

$$R_N = H\left(\sum_i X_i + s'_i\right) \bmod N$$

where each player has also privately computed a secondary signature $Sig\ P'_i = (r'_i, s'_i)$. Note that the addition operator '+' here could be replaced in another implementation by another operator, such as concatenation or an XOR.

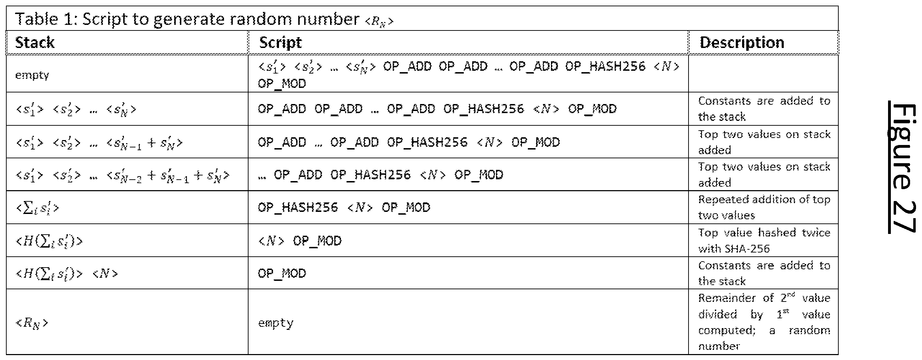

Figure 27 illustrates an example execution flow of a script $<R_N>$ for generating a random number $R_N$.

To extend one of the two methods individually, multiple oracles may be used and players may each provide multiple hash values $Y_i$ or secondary $r'_i$ values. For instance, if there are two oracles using the hash method, the random number $R_N$ may be calculated as

$$R_N = H\left(\sum_i X_{i,1} + \sum_i X_{i,2}\right) \bmod N$$

where the first oracle sends the sum of one set of pre-images $X_{i,1}$ to the second, who adds this to the sum of a second set of pre-images $X_{i,2}$ and computes the random number.

By using multiple oracles, the risk of an oracle being somehow corrupted by a malicious user is eliminated.

Extending this to a large number of oracles reduces the risk of all oracles colluding, at the expense of greater computational and temporal overheads. Only a single oracle needs to be genuine for the random number to be generated securely and unpredictably.

## PROVABLY FAIR GAMES USING BLOCKCHAIN

The term 'provably fair' has become widely used in the gaming literature but is poorly defined. Given the lack of formal definitions in the literature, the following definitions are used herein when discussing implementing provably fair games on-chain.

### Definition 1: Loose provable fairness

Start and end states exist on-chain, whilst the logic defining intermediate state transitions can exist off-chain, implemented by a trusted (auditable) oracle, for example. If the initial state can be followed to the end state by only applying the off-chain audited logic, then the game is provably fair.

### Definition 2: Strict provable fairness

Virtually all game logic is shown to be provably fair, on-chain, and each state transition is implemented, evidenced and enforced on-chain, e.g. using a blockchain scripting language.

### Key-based representation of game elements

As used herein, the term "game element" is used to refer to a feature of a game which, at least in part, determines the outcome of the game. For instance, in a game of cards, e.g. poker, blackjack, rummy, etc., the game elements are the playing cards. In a game of roulette, the game elements are the numbers which make up the roulette wheel. In a slot machine, the game elements are the symbols of the slot machine reel. The skilled person will appreciate which features of any particular game are considered to be "game elements".

The present disclosure provides a mechanism for encoding the game elements of a game as keys, e.g. cryptographic private-public key pairs. The following example describes a technique for encoding playing cards, but it will be appreciated that the same technique may be applied to other types of game elements.

In most card games, the outcome of a particular game is determined by the set of cards or 'hand' that belongs to each player. The quality of a hand of cards is game-dependent and will be determined by the rules or logic of the game, which is known publicly to the player(s). The winner(s) of a particular game therefore tend to be the player(s) who hold the best hand of cards, according to the rules of the game.

A standard deck of playing cards comprises a set of 52 unique cards, which is formed of four distinct suits - diamonds (D), clubs (C), hearts (H), and spades (S) - each containing the values 2, 3, 4, ..., 10, J, Q, K, A. Therefore a deck of cards can be treated as a set ID, with 52 unique elements:

$$\mathbb{D} = \{2_D, 3_D, \dots A_D, 2_C, 3_C, \dots A_C, 2_H, 3_H, \dots, A_H, 2_S, 3_S, \dots, A_S\}$$

; or

$$\mathbb{D} = \{2D, 3D, \dots AD, 2C, 3C, \dots AC, 2H, 3H, \dots, AH, 2S, 3S, \dots, AS\}.$$

Depending on the game in question, a player's hand will comprise a combination of one or more of these elements, which is simply a sub-set of $\mathbb{D}$. Note that, in general, there is no concept of ordering of cards within a given hand, and thus only combinations of cards are relevant, rather than permutations. An example of such a hand h would be the following *hand : h = {AD, AC, AH, KD, KS}*, which would correspond to a strong hand (i.e. a 'full house') in a game such as poker.

The concept of a 'hand' can be utilized in a multi-player card game by assigning a set of random key-pairs to each card in the deck $\mathbb{D}$. By choosing asymmetric key-pairs, such as ECC key-pairs, two new sets of data items can be generated that represent the deck of cards; the set $\mathbb{S}$ of private keys and the set $\mathbb{P}$ of corresponding public keys:

$$\mathbb{S} = \{s_{2D}, s_{3D}, \dots, s_{AD}, s_{2C}, s_{3C}, \dots, s_{AC}, s_{2H}, s_{3H}, \dots, s_{AH}, s_{2S}, s_{3S}, \dots, s_{AS}\}$$

; and

$$\mathbb{P} = \{P_{2D}, P_{3D}, \dots, P_{AD}, P_{2C}, P_{3C}, \dots, P_{AC}, P_{2H}, P_{3H}, \dots, P_{AH}, P_{2S}, P_{3S}, \dots, P_{AS}\}.$$

The private-public key-pairs are generated such that each card in the deck is represented by a unique key-pair.

Using these sets of related private and public data that are mapped to a set of playing cards, unique representations of hands can be constructed in a compact and efficient manner. For example, the hand $h$ from above can be represented using either a single private key or a single public key, rather than a 5-element sub-set of $\mathbb{D}$:

$$hand : P_h = P_{AD} \oplus P_{AC} \oplus P_{AH} \oplus P_{KD} \oplus P_{KS} \; ;$$

or

$$hand : s_h = s_{AD} + s_{AC} + s_{AH} + s_{KD} + s_{KS} \, ,$$

where the binary operator '$\oplus$' represents elliptic curve point addition and the operator '+' represents addition.

Representing hands of cards in this way has a number of advantages. First, a unique representation can be generated from either public data (i.e. public keys), private data (i.e. private keys) or a mixture of the two. This allows winning hands to be generated in such a way that preserves visibility of the card game. For example, the hand $P_h$ above can be generated from three 'public' keys and two 'private' keys, in the same way that a hand in poker is generated as a combination of three face-up cards in the middle of the table and two face down cards belonging to the player. In this case, the three publicly visible keys could be $P_{AD}, P_{KD}, P_{KS}$, representing the cards AD, KD, KS respectively, while the private keys privately visible to one player could be $s_{AC}, s_{KS}$, representing the AC, KS respectively. The hand can then be publicly represented by a single public key, without necessarily disclosing the two face down cards in the player's hand, as shown below:

$$P_h = P_{AD} \oplus (s_{AC} \cdot G) \oplus P_{KD} \oplus P_{KD} \oplus (s_{KS} \cdot G)$$

Secondly, by using the homomorphic, additive structure of private-public key pairs, hands can be more compactly represented. That is, a hand comprising $n$ cards will either contain $y$ private keys (i.e. $y \times 256$ *bits* of data) or $z$ public keys (i.e. $z \times 33$ *bytes* of data), where $y + z = n$, whereas a single private key $s_h$ or a single public key $P_h$ each comprise only 256 *bits* or 33 *bytes* of data respectively.

Thirdly, locking scripts can be constructed that send funds to keys that represent the entire hand of cards, and such that the script requires the spender to prove knowledge of the private keys corresponding to the winning hand in full. For a game in which a player has face down cards, funds locked using such a script would only be redeemable by the legitimate winner who knows the keys corresponding to their own cards.

The same teaching can be applied to other non-card games. For example, faces of a die may each be represented by a respective private-public key pair. A six-sided die may be mapped to the sets:

$$\mathbb{S}_{dice} = \{s_1, s_2, s_3, s_4, s_5, s_6\}$$

; and

$$\mathbb{P}_{dice} = \{P_1, P_2, P_3, P_4, P_5, P_6\}.$$

In games which depend on the outcome of more than one roll of a die, e.g. craps, the combined outcome may be represented by a single key. As an illustrative example, the game of craps involves a player rolling two dice, with the outcome of the game depending on the total score rolled. The total score may be mapped to the public key $P_{score} =$

$P_{die\_1} \oplus P_{die\_2}$.

A similar mapping may be constructed for symbols of a slot machine. A slot machine comprises at least one reel, but more typically it comprises three or five reels. Each reel comprises a plurality of symbols, e.g. 22 symbols. Therefore the symbols on each reel may be represented by a set of public-private key pairs, allowing each possible outcome (i.e. the combination of symbols from each reel) to be represented by a single private key or public key.

**On-chain selection of game elements**

Many games, particularly games of chance, rely to some extent on the random selection or outcome of game elements. For instance, in a game of playing cards (e.g. poker), the individual cards which are typically drawn from the top of a shuffled deck, whereby shuffling of the deck introduces randomness in the cards which are drawn, either privately to individual players or publicly to all players. Similarly, the outcome of a game of roulette depends on the random interactions between a roulette ball and a roulette wheel which result in the ball landing in an unpredictable position (i.e. number) on the wheel. Dice games also rely on the random interaction between the die and the surface on which it is rolled.

The present disclosure recognises that game elements may be randomized on-chain in order to enable provably-fair games. Each game element is represented by a respective public key. A locking script is constructed which comprises the set of public keys required to represent the particular game elements of the game being played, and a random seed, which may have been produced in accordance to one of the previously described methods under "Random Number Generation", is used to randomly select one of the public keys as a winning public key.

The following randomisation script, denoted by $<P_{k=0}>$, may be used to randomly select a public key from the set of $N$ public keys $P_i$, where each public key $P_i$ represents a respective game element. The randomisation script is seeded by a random number, e.g. the previously presented script $<R_N>$, which calculates a random number in-situ. $<P_{k=0}> = <P_1> <P_2> ... <P_N> <R_N>$ OP_ROLL OP_TOALTSTACK OP_DROP ... OP_DROP OP_FROMALTSTACK, where there are $N$ - 1 uses of the operator 'OP_DROP' and $N$ public keys.

The opcode OP_ROLL causes an item at a position on the stack equal to a number preceding the opcode to be moved to the top of the stack. E.g. If the opcode OP_ROLL follows the number 3, the third item back in the stack is moved to the top of the stack.

Therefore the set of public keys are manipulated according to the value produced by the sub-script $<R_N>$. This script enables a random public key, and therefore a random game element, to be selected for use in a game. For instance, the randomly selected game element may be the winning outcome for a roulette wheel.

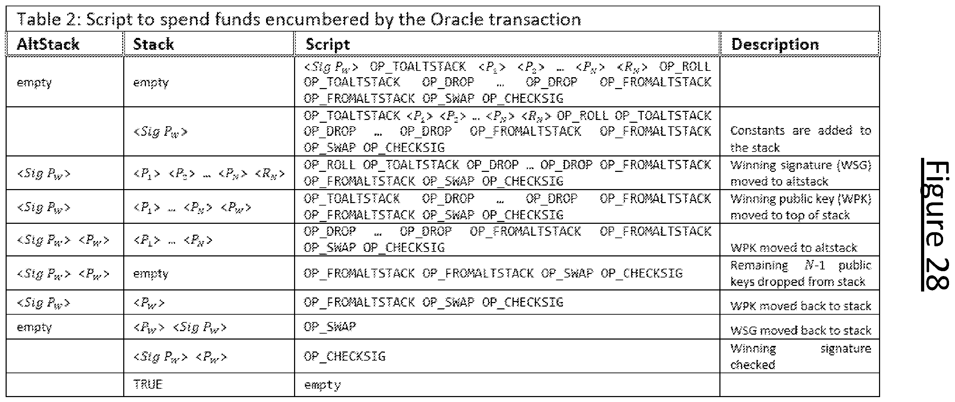

Figure 28 illustrates an example execution flow of a script $<P_{k=0}>$ for selecting a winning public key. In this case, the output script of a game transaction (described below) is executed alongside an input script of a redemption transaction (described below), wherein the input script comprises a signature corresponding to the winning public key.

**On-chain re-ordering of game elements**

The following describes an example method for simulating the shuffling of a pack of playing cards on-chain. The "shuffled deck" can then be used to enable a provably-fair card game to be played out. As discussed, 52 unique key-pairs can be assigned a one-to-one mapping with the 52 unique items in a deck of playing cards, which can in turn be expressed as a simple list of consecutive stack elements in blockchain script.

A random number $R_N$ is used to produce $k$ pseudorandom numbers $n_1, n_2, ... n_k$, where $k$ is a 'shuffling parameter' indicating the minimum number of card-rolling operations that must be performed for the deck to be considered fairly shuffled. The deck of cards is then shuffled by performing $k$ 'rolling' operations in script. In order to implement this, the following two portions of script may be used:

$$<R_N> = <X_0> <X_1> ... <X_N> \text{ OP\_ADD } ... \text{ OP\_ADD OP\_HASH256 } <N> \text{ OP\_MOD}$$

$$<P_k> = <P_1> <P_2> ... <P_N> <H^{k-1}(R_N)> <N> \text{ OP\_MOD OP\_ROLL}$$

where $X_0, X_1, ..., X_N$ are a set of $N$ pre-committed values, one value generally having been pre-committed by each of the $N$ players in the game, and where $H^0(R_N) = R_N$. Note that $<R_N>$ may be replaced by any script which produces a pseudorandom number.

Executing the randomisation script k times results in k public keys being selected at random and placed at the top of the stack. That is, if the randomisation script is executed once, a randomly selected public key is placed at the top of the stack. If the randomisation script is executed a second time, a second, randomly selected public key is placed at the top of the stack (i.e. on top of the previously selected public key). This process can be repeated as many times as necessary depending on the required level of randomness. It can therefore be seen that executing $<P_k>$ a number of times where $<P_1>$ $<P_2>$ ... $<P_N>$ map to playing cards has the effect of shuffling a deck of cards.

Executing the randomisation script k times in script can be performed using the algorithms below.

**On-chain partial shuffle algorithm ($\phi(n)$)**

**Input(s):** $\{P_1, P_2, ..., P_{51}, P_{52}\}$, n

1. Use the list of keys $\{P_1, P_2, ..., P_{51}, P_{52}\}$ to create the partial locking script $<P_1>$ $<P_2>$ ... $<P_{52}>$;
2. Complete another partial locking script: $<P_n>$;
3. Execute the partial shuffle step by running a valid unlocking script against a locking script containing the partial locking script of 2.

**Output(s):** $\{P_1, P_2, ..., P_{52}, P_n\}$

**On-chain complete shuffle algorithm ($\Phi(n, k)$)**

This method comprises the repeated application of the partial shuffle algorithm above. The partial shuffle is performed *k*-times, where k is a parameter that determines how many partial shuffles are required to meet the implementer's requirements for 'provable fairness'.

$$\textbf{Input(s)}: \{P_1, P_2, ..., P_{51}, P_{52}\}, n = R_N, k$$

$$1. \quad \text{For} \, (i = 0, i \leq k, i + +) \, \{$$

$$\text{Perform} \, \phi(i)$$

$$\}$$

$$\textbf{Output(s)}: \{P_\alpha, P_\beta, ..., P_\gamma, P_{n_k}\}$$

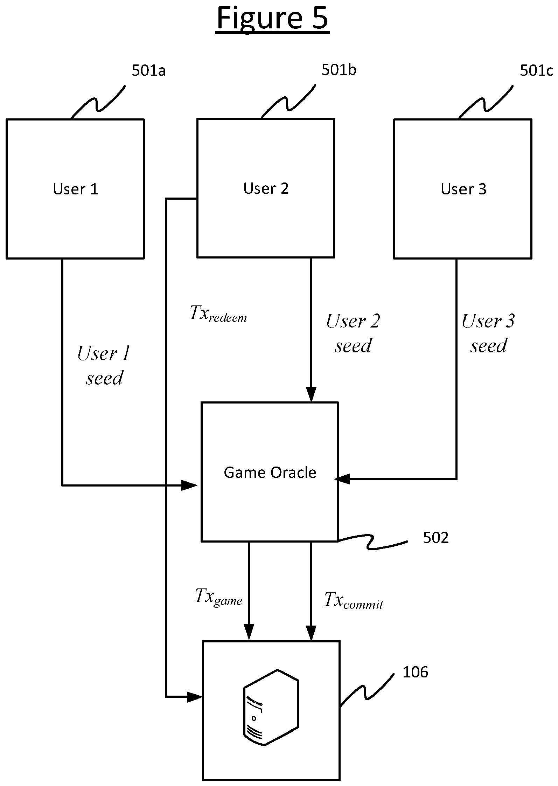

Embodiments of the present disclosure will now be described with reference to Figure 5. Figure 5 illustrates a system for playing a game. In general, the game may be played by any number N of users 501 (i.e. players), each user 501 operating respective computer equipment, but for illustrative purposes only three users are shown in Figure 5. The game is implemented by a game oracle 502, e.g. a third party who is not a player of the game. The game oracle 502 may operate respective computer equipment. The oracle 502 may be a smart contract or an autonomous agent. That is, the oracle 502 may be a computer protocol intended to implement the embodiments described herein. Figure 5 illustrates the oracle 502 obtaining a respective user seed from each user 501, and sending a commitment transaction $Tx_{commit}$ and a game transaction $Tx_{game}$ to the blockchain network 106 for inclusion in the blockchain 150. Figure 5 also illustrates a user 501b sending a winning redemption transaction (labelled "redeem.") to the blockchain network 106. The previously mentioned transactions will be described below.

The computer equipment of each user 501 and the game oracle 502 (if applicable) comprises respective processing apparatus comprising one or more processors, e.g. one or more CPUs, GPUs, other accelerator processors, application specific processors, and/or FPGAs. The computer equipment of each user 501 and the game oracle 502 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment of each user 501 and the game oracle 502 stores software comprising a respective instance of at least one client application arranged to run on the processing apparatus. It will be understood that any action attributed herein to a given user 501 or the game oracle 502 may be performed using the software run on the processing apparatus of the respective computer equipment. The computer equipment of each user 501 comprises at least one user terminal, e.g. a desktop or laptop computer, a tablet, a smartphone, or a wearable device such as a smartwatch. The computer equipment of a given user 501 or the game oracle 502 may also comprise one or more other networked resources, such as cloud computing resources accessed via the user terminal. The client application or software may be initially provided to the computer equipment of any given user 501 or the game oracle 502 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

Note that whilst described separately here, the users 501 may be the same users 103 as described in Figures 1 to 3.

In some examples, the user 501 (i.e. the user's computer equipment) may be able to generate and/or transmit transactions to the blockchain 150. Moreover, the user's computer equipment may be able to read transactions from the blockchain 150. In general, the user 501 may perform any of the actions attributed to Alice 103a and/or Bob 103b as described with reference to Figures 1 to 3.

Similarly, the computer equipment of the game oracle 502 is configured to read transactions from and transmit transactions to the blockchain 150.

Each user 501 generates a respective data item, referred to as a user seed. The user seed may be generated in accordance with any of the first, second or third methods for generating a random number as described above. For example, the user seeds may be a respective hash or a respective component of a digital signature. In some examples, the game oracle 502 also generates a seed data item, referred to below as an oracle seed.

The game oracle 502 obtains the user seeds (or a hashes thereof). The game oracle 502 may obtain the user seeds (or the hashes thereof) directly from each user 501, e.g. via a (secure) communication channel. Alternatively, the user 501 may publish their user seeds (or the hashes thereof), e.g. on a website, or to the blockchain 150. That is, the user seeds (or the hashes thereof) may be included in a blockchain transaction which is transmitted to the blockchain 150 by the users 501 or the game oracle 502. For instance, the users 501 may add an input (and optionally, an output) to a transaction (referred to below as a commit transaction $Tx_{commit}$), with their user seeds (or hashes thereof) included in the input and/or output which that user 501 added to the commit transaction $Tx_{commit}$.

Note that in some cases a user's seed (or hash of their seed) may not be signed by their respective signature. That is, if the hash method is used and each user 501 adds their respective hash of their seed to a respective input of the commit transaction $Tx_{commit}$, along with their signature, then the user's signature may not necessarily sign their hash. This introduces the issue of the commit transaction $Tx_{commit}$ not containing the required information for dispute resolution, if necessary, since the hashes are not signed by the users in that case. However, if a user's correct hash was not used by the oracle 502 to generate the pseudorandom number, the user 501 would easily notice this (due to the game transaction $Tx_{game}$ being mined to the blockchain) and would then report the issue and/or cease to play the game using the same oracle 502. Therefore, the transparency of the proposed protocol incentivises the oracle 502 to use the actual seeds (or hashes thereof) provided by the users.

Note also that if the signature method is used to attest to the user seed then this is mitigated because the signature itself is the commitment $Tx_{commit}$.

In examples where the oracle 502 also provides an oracle seed, the oracle 502 may generate the commitment transaction $Tx_{commit}$ which includes the oracle seed (or a hash thereof), and then transmit the commitment transaction $Tx_{commit}$ to the users 501. The users may, in turn, add their user seeds (or hashes thereof) to the commitment transaction $Tx_{commit}$ and sign their input with a respective digital signature. Once the users have added their input, the oracle 502 may sign the commitment transaction $Tx_{commit}$ as a whole and transmit the commitment transaction $Tx_{commit}$ to the blockchain network 106.

The oracle 502 obtains a sequence of public keys. Each key is to be used to represent a respective game element. The oracle 502 may obtain at least some of the public keys from the users 501. Each user 501 may provide one or more (preferably two) public keys to the oracle 502. The oracle 502 generates the remaining public keys (or a minimum quota of the public keys) required to represent the total number of game elements.

The oracle 502 generates a gaming transaction (also referred to below as a shuffling transaction). An output of the gaming transaction comprises the sequence of public keys and a portion of script configured to generate at least one pseudorandom number based on the seeds. The output also comprises a portion of script configured to re-order the sequence of public keys (by generating a list of the public keys, wherein the order of public keys in the list of public keys does not exactly match the order of public keys in the sequence of public keys) based on the at least one pseudorandom number. The selection of public keys from a sequence of public keys has been described above. Note that the script may be included in a spendable output or a non-spendable output (e.g. an OP_RETURN output). The script acts as evidence of the re-ordering that would take place as a result of the script, were it to be executed.

The portion of script may select one of the public keys, based on a first pseudorandom number, and place the selected public key at the beginning on the list, thus re-ordering the initial sequence of public keys. This process may be repeated several times, whereby with each repetition a public key is selected based on a newly generated pseudorandom number and placed at the beginning on the list of public keys. The repeated selection of public keys from a sequence of public keys has been described above.

After the re-ordering process (i.e. the generation of the list of public keys), the first public key in the sequence of public keys (i.e. the public key at the beginning of the sequence of public keys obtained by the oracle 502) will be mapped, after the re-ordering process, to a game element that is not the first game element in the list of game elements obtained by the oracle 502. This is assuming that the first pseudorandom number does not result in the first public key being selected. In general, at least one of the public keys in the sequence of public keys will map to a game element at a different position (i.e. index) in the list of game elements. Using playing cards as an analogy, generating the list of the public keys based on one pseudorandom number is akin to selecting one card from a deck of playing cards and changing its position in the deck. Generating the list of the public keys based on thirty pseudorandom numbers is akin to selecting thirty cards from a deck of playing cards and changing their position in the deck.

The generation of a pseudorandom number in script has been generally described above. The output script may combine (e.g. sum) the set of seed data items (or hashes) and take a hash of the combination. The hash of the combination (referred to below as a hash result) is then mapped to a number for use as a pseudorandom number, the mapping being based on the total number of game elements represented by the public keys, or in other words, the total number of public keys in the sequence of public keys. One way to implement the mapping is by performing a modulo operation on the hash result, wherein performing the modulo operation uses the total number of public keys to take the modulus of the hash result. In the case of a card game, a modulus of 52 may be used as there may be 52 public keys to represent all the game elements for a deck of playing cards.

The same technique used to generate one pseudorandom number in script can be used one or more additional times to generate one or more additional pseudorandom numbers. That is, to generate a first random number, the output script may combine (e.g. sum) the set of seed data items (or hashes) and applying a first hash function to the combination. The hash of the combination (referred to below as a first hash result) is then mapped to a number for use as a first pseudorandom number, the mapping being based on the total number of game elements represented by a first sequence of public keys, or in other words, the total number of public keys in the first sequence of public keys. To generate a second pseudorandom number, the output script may combine (e.g. sum) the set of seed data items (or hashes) and applying a second hash function to the combination. The hash of the combination (referred to below as a second hash result) is then mapped to a number for use as a second pseudorandom number, the mapping being based on the total number of game elements represented by the sequence of public keys. The first and second hash functions may be the same hash function or different hash functions. Here, a different hash function may apply the same hash function multiple times. This process may be repeated as many times as required.

The oracle 502 may transmit the gaming transaction to the users. For instance, the gaming transaction may be sent over a communication channel, or broadcasted to the blockchain network 106 for inclusion in the blockchain 150.

The oracle 502 may generate a map comprising a mapping of public keys in the list of public keys to game elements in the list of game elements. In other words, the oracle 502 generates a list of public keys and a list of game elements to which those public keys are mapped. The list of game elements may have been generated randomly. The oracle 502 may generate a hash of the mapping and, optionally, include the hash of the mapping in a blockchain transaction, e.g. the game transaction $Tx_{game}$.

The oracle 502 may generate a Merkle tree (or a variant thereof) to represent the sequence of game elements. Merkle trees are well known in the art and so will not be described in detail here other than to say that a Merkle tree is a tree in which every leaf node is a hash of a data block, and every non-leaf node is a hash of the hashes of its child nodes, where the Merkle tree is represented by a single root node (or root hash). The Merkle tree generated by the oracle 502 has, as one leaf node of each pair of leaf nodes, a hash of a respective game element, and as the other lead node of each pair of leaf nodes, a hash of a respective proof token (or attestation token). Each proof token represents a position in the sequence of game elements. Therefore, the first game element in the list of game elements is paired with a proof token representing the first position in the list of game elements, and so on. The Merkle tree enables the oracle 502 to attest to the order of game elements in the list of game elements. The oracle 502 may publish the root node on-chain, or otherwise make available the root hash to the users, preferably ahead of the game. The root hash may be included in the commit transaction $Tx_{commit}$.

In some examples, the oracle 502 may provide each of the users with one or more game elements for use in playing the game. In order to provide a user 501 with a game element, the oracle 502 may send each user 501 a set of proof tokens. In examples where a user 501 has generated one or more public keys and provided those to the oracle 502, the oracle 502 may send the user 501 proof tokens corresponding to game elements mapped (after the re-ordering process) to those one or more public keys. That is, if a user's public key is mapped to the seventeenth game element in the sequence of game elements, the oracle 502 may send the user 501 the seventeenth proof token (i.e. the proof token in the seventeenth pair of leaf nodes in the merkle tree). The oracle 502 may also send each of the users an indication of the game element represented by the respective proof tokens that are sent to the respective users. The indications may be sent privately (e.g. over a secure communication channel) such that only a given user 501 is aware of the game elements mapped to their generated public keys.

The oracle 502 may also provide to one or more of the users, e.g. upon request, a respective Merkle path for the respective game element indicated by the respective proof token sent to a respective user. That is, if the oracle 502 sends the second user 501b the first proof token paired with the first game element in the sequence of game elements, the oracle 502 may send the second user 501b a Merkle path for proving that the first game element was indeed represented by the first leaf node in the Merkle tree.

The oracle 502 may send, to one or more of the users, a respective second set of proof tokens. Each of the second set of proof tokens corresponds to a game element mapped to a public key to which the users do not have the corresponding private key. Instead, the oracle 502 transmits those private keys to the users. This enables the users to generate a respective, potential winning public-private key pair that represents a respective combination of game elements. That is, a given user 501 may generate a potential winning private key based on a combination of the private key(s) which that user 501 already has access to (i.e. the private key(s) corresponding to the public key(s) generated by that user) and one or more private keys received from the oracle 502.

The oracle 502 may generate a payout transaction which comprises an output locked to a winning public key. The winning public key is one of the respective potential winning public keys generated by the users. The oracle 502 is able to generate the winning public key since the oracle 502 has access to all of the public keys. The oracle 502 generates the winning public key based on the rules of the game, e.g. a particular one of the potential winning public keys may be deemed to be represent a winning combination of game elements.

**EXAMPLE USE CASE**

**Provably Fair Poker**

In order to play a hand of poker, 52 key-pairs are generated, where each key-pair will eventually be assigned a card from a standard playing deck. The player 501 who wins the hand will eventually redeem their winnings (i.e. the funds in the pot) by redeeming a UTXO that is locked to the winning hand key $P_h$, which will comprise the five public keys of the winning hand added together, as described above. For example, if the winning hand is a 'full house' the winning hand will be constructed as:

$$P_h = P_{AD} \oplus P_{AC} \oplus P_{AH} \oplus P_{KD} \oplus P_{KS}$$

The present disclosure ensures that only the winning player has the ability to redeem the winnings by signing with the corresponding private key $s_h = s_{AD} + s_{AC} + s_{AH} + s_{KD} + s_{KS}$ for the hand. It is therefore necessary that *only the winning player* knows all of the private keys corresponding to the winning hand, and therefore only the winning player has the ability sign against $P_h$ and redeem the winnings.

Neither the oracle 502 (e.g. dealer), nor any other non-winning player should have knowledge of all five of these keys. This is achieved by ensuring that there is a key generation round in which each player 501 selects their own keys to be assigned the cards each player 501 is dealt.

**Initialising a hand of poker**

The initialisation phase, to be conducted before any cards are dealt or betting commences in a hand of poker, comprises three steps:

1. Key-generation
2. A commitment phase
3. A shuffling phase

This process will be performed each time a new hand of poker is to be played.

## 1. Key Generation

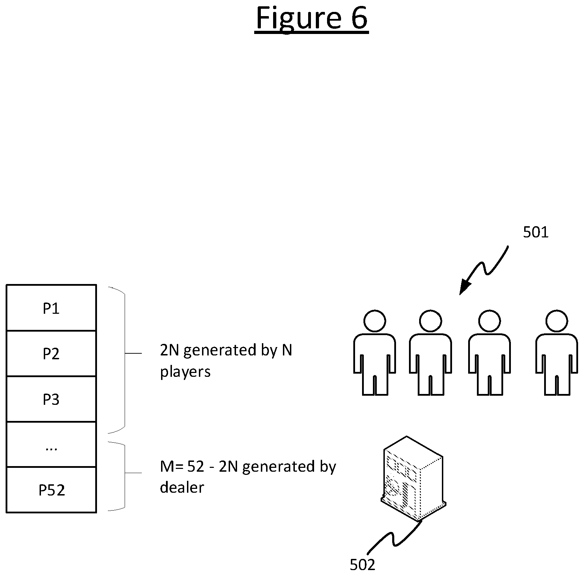

Before the game is played, the 52 key-pairs required are established as follows, and as shown in Figure 6:

1. Each of the $N$ players sends the dealer (oracle 502) a pair of public keys $P_{r,1}$, $P_{r,2}$ for which the corresponding private keys $s_{r,1}$, $s_{r,2}$ are known only to the $r^{th}$ player. This constitutes a total of $2N$ public keys, with a maximum of $N = 23$ players (or $N = 22$ players if cards are to be "burned"). These key pairs will correspond to the players' respective face down cards (the "hole" cards).

2. The dealer generates a minimum of $M = 52 - 2N$ key-pairs to cover the remaining cards in the deck. At the start of the game, the dealer knows both the public and private key counterparts for these key pairs, and only the dealer knows the private keys. The key pairs will correspond to the five face up cards in the middle of the table (the "community" cards).

The reason for requiring that player 501 generate their own two key-pairs is that it will ensure that only they are able to unilaterally redeem their winnings at the end of the game, due to the fact that not even the dealer knows the private keys corresponding to a player's face down cards (the "hole" cards).

This key-generation phase gives us the following list of 52 key-pairs before the game:

| Key-pair no. | Key-pair | Creator of key-pair |
|---|---|---|
| 1 | $P_1 = P_{1,1} = s_{1,1} \cdot G$ | Player 1 |
| 2 | $P_2 = P_{1,2} = s_{1,2} \cdot G$ | Player 1 |
| 3 | $P_3 = P_{2,1} = s_{2,1} \cdot G$ | Player 2 |
| 4 | $P_4 = P_{2,2} = s_{2,2} \cdot G$ | Player 2 |
| ... | ... | ... |
| 2N | $P_{2N} = P_{N,2} = s_{N,2} \cdot G$ | Player N |
| 2N + 1 | $P_{2N+1} = P_{2N+1} = s_{2N+1} \cdot G$ | Dealer |
| 2N + 2 | $P_{2N+2} = P_{2N+2} = s_{2N+2} \cdot G$ | Dealer |
| ... | ... | Dealer |
| 52 | $P_{52} = s_{52} \cdot G$ | Dealer |

## 2. Commitment Phase

The next step in the initialisation is to create a commitment transaction $Tx_{Commit}$ in which:

- The dealer first commits to a random order $\Omega$ of card elements (i.e. the list of game elements) and a random hash preimage $X_0$, both of which are known only to the dealer at this time.
- Each of the $N$ players commits to a random hash preimage $X_1, X_2, ..., X_N$, each of which is known only the respective player at this time.
- The dealer completes the transaction by signing over the entire transaction and broadcasting it to be mined.

This transaction is used not only to commit to a set of hash preimages $X_0, X_1, X_2, ..., X_N$ that will be used to seed an on-chain random number generator, but also to commit the dealer to a random ordering $\Omega$ of the elements (i.e. the list of game elements) in a deck of cards. This random ordering will later form one side of a mapping $\gamma$: *card elements → public keys* that will determine which 'cards' each player 501 is 'dealt' in the hand of poker.

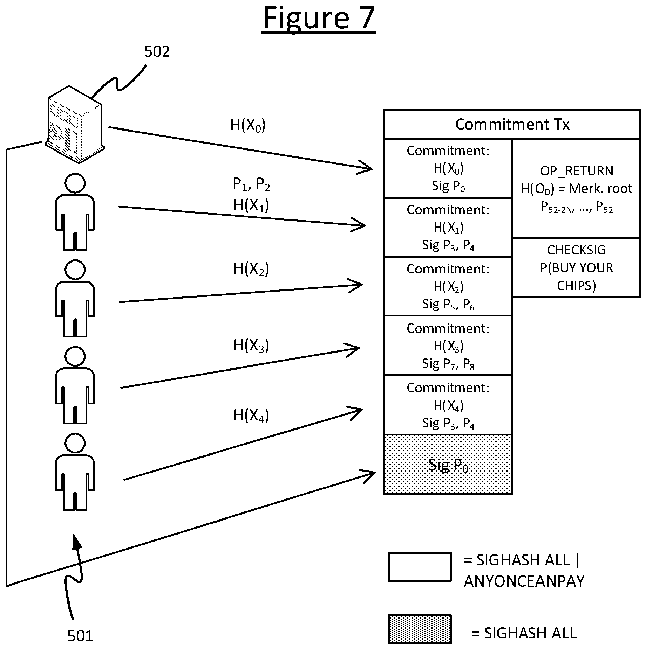

Additionally, this transaction also commits to the public keys $P_{52-2N}, ..., P_{52}$ that are generated by the oracle 502, which means the oracle 502 cannot change the key-pairs after players begin joining by signing inputs. This is enforced by the use of varying SIGHASH flags, as shown in Figure 7.

An example of such a commitment transaction $Tx_{Commit}$ is shown in Figure 7. Note that creating this transaction is akin to 'buying in' to a sit at a poker table. It should also be noted that many different variants of this transaction could exist. For example, the committed values, which are committed as hashed preimages $H(X_0), H(X_1), ... H(X_N)$, could alternatively have been committed in an output (or set of outputs).

The order in which the parts of this transaction are constructed is important. The inputs should preferably be created in order (top to bottom) such that the dealer signs the transaction and attests to the initial card ordering $\Omega$ (the list of game elements) before any player 501 signs their own input and 'joins' the game.

The order of operations in creating this transaction is also important because it will be used to define the order in which cards are 'dealt' in the game (the sequence of game elements). The following conventions that define the order of dealing cards *based on the commitment transaction $Tx_{commit}$* are:

1. The two 'hole' cards are to be dealt first, and in the following order:

    a. Go around the table once: $P_1, P_3, P_5, ..., P_{2N-1}$
    b. Go around the table a second time: $P_2, P_4, P_6, ..., P_{2N}$

2. The five 'community' cards are to be dealt subsequently, in the following order:

    a. Deal the flop: $P_{2N+1}$, $P_{2N+2}$, $P_{2N+3}$
    b. Deal the turn: $P_{2N+4}$
    c. Deal the river $P_{2N+5}$.

Note that in the game of poker, a total of only $2N + 5$ cards are ever required, of which only 5 corresponding key-pairs need be generated by the dealer. However, because of the fact that the dealer must attest to a list of key-pairs $P_{52\text{-}2N}$, ..., $P_{52}$ before the final value of $N$ is known, then it is sensible to require that the dealer includes at least 48 such public keys (i.e. the two-player case), of which only 5 will actually be dealt.

**Assignment of Cards to Keys:**

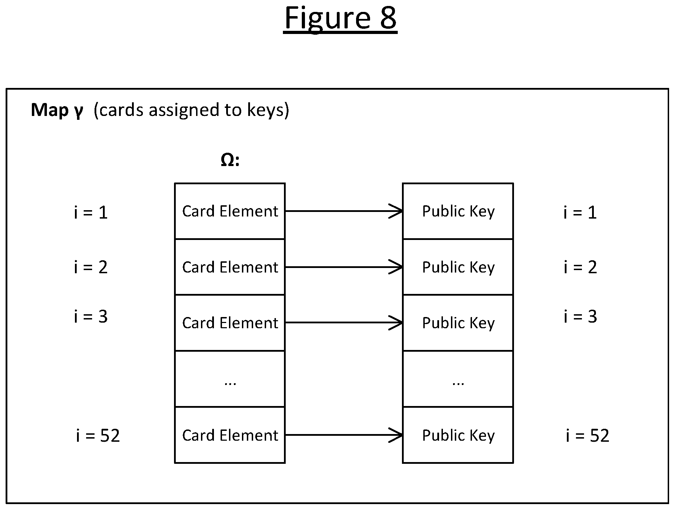

As mentioned above, this initial ordering $\Omega$ will form one half of a mapping $\gamma$: *card elements $\rightarrow$ public keys.* Because the order in which cards will be dealt as public keys has already been decided, i.e. the sequence of public keys (see above), the mapping of card elements to public keys will therefore determine *which* cards are actually being dealt to players, in the order specified above. The form of the map $\gamma$ is shown in Figure 8.

In order to simulate a real poker game, clearly the assignment of card elements to keys must be randomised. This is achieved using the following principles:

1. The initial ordering $\Omega$ of card elements (the LHS of the map $\gamma$, the list of game elements) is randomly chosen by the dealer first. This is done before any public keys are generated or ordered.

2. The list of public keys that populate the RHS of the map $\gamma$ are the keys generated in phase 1 (key generation; sequence of game elements). They are initially given a simple ordering, such as the indices $i = 1$ for $P_1$ and $i = 2$ for $P_2$ up to $i = 52$ for $P_{52}$.

3. The final form of the map $\gamma$, to be used for a hand of poker, is generated by shuffling the order of the public keys (RHS of $\gamma$) to generate the list of public keys, while keeping the pre-randomised card elements fixed (LHS of $\gamma$).

The public keys on the RHS are randomised in a shuffling phase as described below.

**Attestation:**

As stated above, the dealer will pre-randomise the set of card elements (the LHS of the map $\gamma$) and that this randomised order (list) of elements must remain *fixed* for the rest of the hand. This may be achieved by ensuring that the initial ordering $\Omega$ is attested to as a hash value on-chain. In this way, the one-way property of hash functions ensures that the pre-randomised ordering of elements must remain fixed, because any change to the hash preimage will result in a change to the originally attested hash.

Attesting to the map may be achieved by encoding it as a Merkle tree (or a variant of a Merkle tree) whereby each card element is paired with an attestation token $T$ and each pair of leaves has an index $i = 1$, $i = 2$, ... $i = 52$ running from left to right. The index $i$ corresponds to the depth of a card element in the pre-shuffled deck, as randomised by the oracle 502.

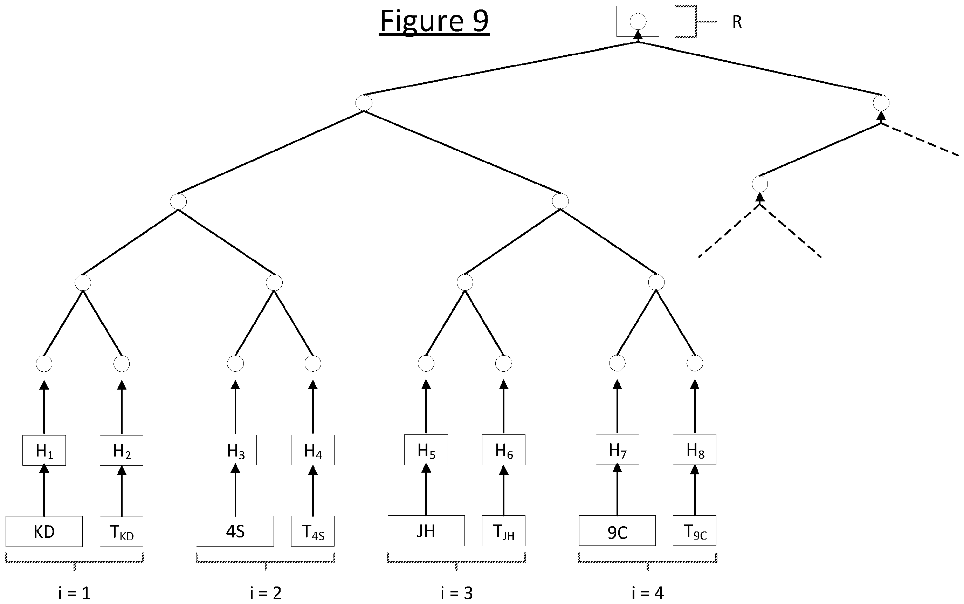

A Merkle tree, as shown in Figure 9, that can be used to attest to the dealer's initial ordering $\Omega$ of card elements may be constructed as follows:

1. The oracle 502 generates the random initial ordering $\Omega$ of card elements that will form the left side of the eventual map $\gamma$, which will determine which key-pairs correspond to which card elements.

2. The oracle 502 creates a binary Merkle tree (shown in figure 9) that stores the initial ordering of card elements of a standard deck of playing cards, as chosen by the dealer:

    a. The dealer generates a set of 52 random numbers to be used as attestation tokens $T_1$, $T_2$, ... $T_{52}$

    b. Each $i^{th}$ pair of leaves is constructed as a card element (e.g. $7H$) that is paired with a proof token $T_i$. There are 52 proof tokens, one for each card, which allow the dealer to prove to a player 501 the original index $i$ (in the dealer's randomised initial ordering) of a given card element *independently* of any other card.

For example, the dealer can prove that the card element $QS$ was stored at the position $i = 34$ in the initial ordering (list of game elements) without revealing any additional information about the positions of any other card element in the initial ordering.

3. The root of the attestation Merkle tree is stored on-chain and attested to (i.e. via digital signature) by the oracle 502. This may appear as a hash digest (i.e. the Merkle root) stored in the commitment transaction $Tx_{Commit}$, signed by the dealer.

A Merkle tree constructed in the way described above is consistent with the requirements of playing a game of poker, in that it allows the dealer to 'deal' a card to a player's pre-generated public key simply by *proving* the index at which the dealt card appeared in the initial ordering corresponds to the index of the player's public key in the finalised map $\gamma$. A convincing *proof* in this context would correspond to the player 501 being provided with the attestation token and a Merkle path that prove the card element had the claimed initial index.

In other words, if the dealer has attested to an initial ordering $\Omega$ of card elements, the first player 501 is dealt cards corresponding to the keys he generated $P_1$, $P_2$, and the order of all public keys $P_1$, $P_2$, ... , $P_{52}$ has been randomly shuffled (in the list of public keys), then the player 501 is 'dealt' his two cards in the following way:

1. The player 501 checks the index values of the publicly-known randomised order of public keys (the list of public keys) to find that his keys are at positions $i = 31$ for $P_1$ and $i = 17$ for $P_2$ respectively. The way in which this randomised order of public keys is generated is shown in the next section (shuffling phase).

2. The dealer providing the player 501 with the card elements (e.g. $AD$ and $6C$) corresponding to the index positions $i = 17$, $i = 31$. These must correspond to the keys $P_1$, $P_2$ as determined by the map $\gamma$.

3. The dealer proving to the player 501 that the card elements $AD$, $6C$ do in fact correspond to the cards $P_1$, $P_2$ by providing evidence that $AD$, $6C$ are at the positions $i = 31$, $i = 17$ respectively by:

a. Providing the proof tokens $T_{31}$, $T_{17}$; and
b. Providing Merkle paths for $AD$, $6C$.

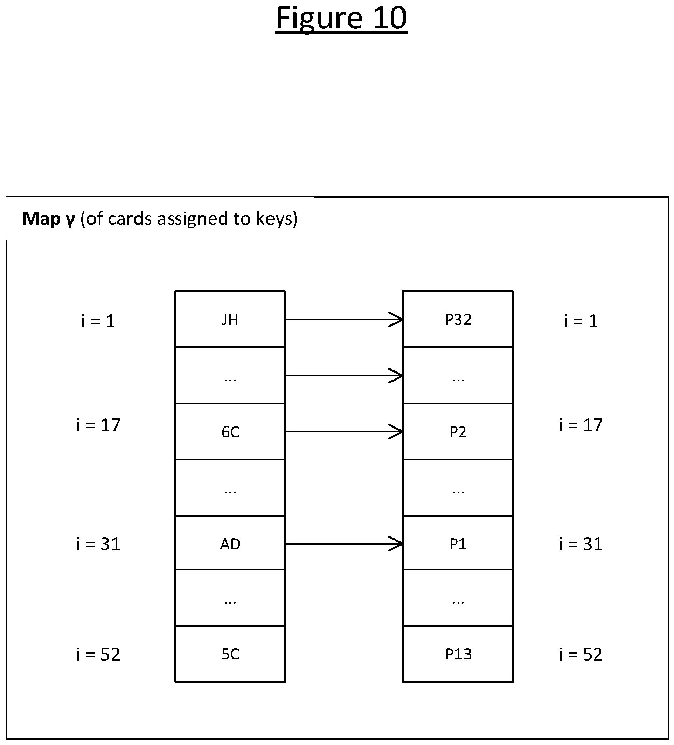

This concept is outlined in Figure 10.

### 3. Shuffling Phase

The previous sections describes how the commitment phase commits multiple items to starting a game of poker:

- The dealer commits to an initial ordering of card elements $\Omega$ (the list of game elements);
- The dealer and players commit to an order of cards being dealt (the sequence of public keys);
- The dealer commits to a random secret value $X_0$; and
- Each of the $N$ players commits to a random secret value $X_1$, $X_2$, ... , $X_N$.

The reason for committing the initial ordering of card elements $\Omega$ and the list of secrets $X_0$, $X_1$, $X_2$, ... , $X_N$ is that this is the necessary committed information that allows *random card-key assignment* to be performed in a way that is provably fair.

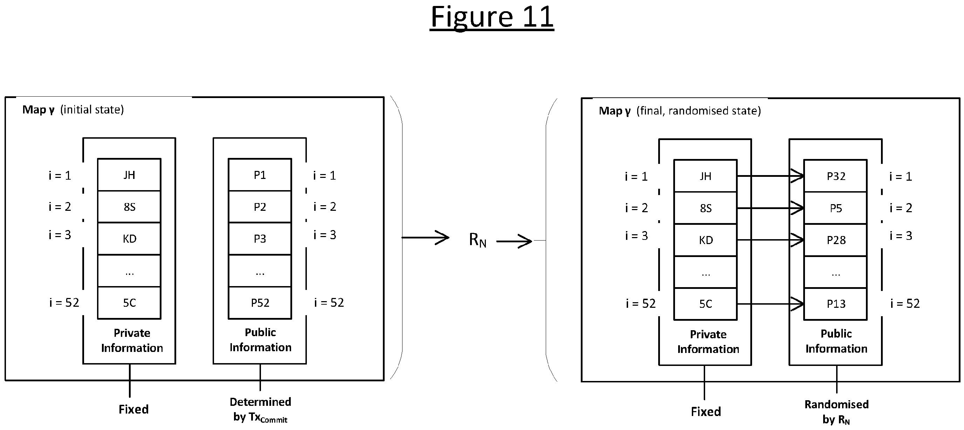

The way this provably fair random assignment is achieved is by careful construction of the mapping between card elements and keys, $\gamma$: *card elements $\rightarrow$ public keys,* in such a way that ensures that the final mapping that is used is provably pseudorandom. The creation of this pseudorandom map is outlined in Figure 11.

The process outlined in Figure 11 has already been described partly in the previous sections. For completeness, the following summarises the process once more:

1. The dealer generates a random and secret initial ordering of card elements, shown on the LHS of the initial state of the map $\Omega$. The dealer also attests to this on-chain.

2. The $N$ players generate a total of $2N$ public-private key pairs, two each, which are given an initial ordering determined by their position in the initial commitment transaction $Tx_{Commit}$. The simple initial ordering is reflected in the RHS of the initial state of the map.

3. A random number $R_N$ is generated using in-script. The number is generated as a hashed combination of all of the committed secret values $X_0$, $X_1$, $X_2$, ... , $X_N$, for example as $R_N = H(X_0 \| X_1 \| \cdots \| X_N)$. This means that the random number is pseudorandom from the perspective of all the players and the dealer, given that no one player 501 could know all of the partial preimage values ahead of time unless all players and the dealer collude.

4. The random number $R_N$ is used to shuffle the order of the public keys on the RHS of the map to generate the list of public keys. The result of this is a randomly-shuffled assignment (i.e. mapping $\gamma$) of card elements to the 52 public keys established for the hand of poker.

**Details of Random Number Generation:**

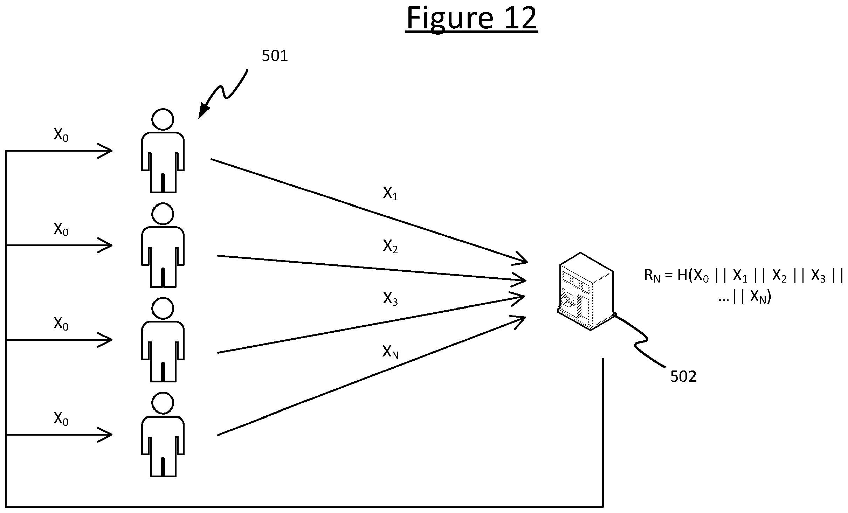

The full details of the process for how the random number $R_N$ is generated and used to shuffle the list of 52 public keys are as follows and shown in Figure 12:

1. The commitment transaction, as described in phase 2 (commitment phase), is created and mined onto the blockchain.

2. Each player ($j^{th}$) sends their secret value $X_j$, corresponding to their committed value $H(X_j)$, to the dealer. In return, the dealer may reciprocate by publicly distributing their secret value $X_0$.

3. The oracle 502 calculates the random number $R_N$ using a function of the committed secrets as, for example, $R_N = H(X_0 \| X_1 \| \cdots \| X_N)$.

4. The oracle 502 creates, signs, and broadcasts a shuffling transaction $Tx_{Shuffle}$.

The shuffling transaction implements the on-chain deck shuffle algorithm $\Phi(\mathbf{R_N}, k)$ as described above. In essence, this is just the execution of a script that, starting with the public keys in the order $P_1, P_2, ... , P_{52}$, repeatedly rolls one of the public keys to the top of the stack by repeated application of the partial shuffle sub-routine $\phi(\mathbf{R_N})$ in script. An example of an output script that implements this shuffle for the case of provably fair poker is:

$<P_1> <P_2> ... <P_N> <R_N> <HMod>$*k OP_DROP $<Roll\ Key>$*k

Where the following script definitions are used here to roll a random public key to the top of the stack k-times:

$<R_N>$ = $<X_0> <X_1>$ ... $<X_N>$ OP_ADD ... OP_ADD OP_SHA256
$<HMod>$ = OP_DUP OP_HASH256 $<52>$ OP_MOD OP_TOALTSTACK
$<Roll\ Key>$ = OP_FROMALTSTACK OP_ROLL

An example of a shuffling transaction $Tx_{Shuffle}$ is shown below.

| Shuffling Transaction, $TxID_{Shuffle}$ | | | |
|---|---|---|---|
| Inputs | | Outputs | |
| Value | Unlocking Script | Value | Locking Script |
| $N \times x$ | $< Sig(P_0)> <P_0>$ | | $<P_1> <P_2> ... <P_N> <R_N> <HMod>$*$k$ |
| | | $N \times x$ | OP_DROP |
| | | | $<Roll\ Key>$*$k$ |
| | | | OP_DROP*k / OP_TOALTSTACK*k |
| | | | OP_DUP OP_HASH160 $<P_{POT}>$ |
| | | | OP_EQUALVERIFY OP_CHECKSIG |

The locking script in this transaction has the following effects, in order:

- The public keys $P_1, P_2, ... , P_N$ are pushed to the stack.
- A random number $R_N$ is generated and pushed to the stack.
- The random number $R_N$ is duplicated and hashed $k$-times, with the result being pushed to the altstack each time. This creates a pseudorandom sequence $H^1(R_N), H^2(R_N), ... , H^k(R_N)$.
- A redundant extra copy of $R_N$ is dropped from the main stack.
- Each derived pseudorandom number is picked from the altstack and used to roll a key to the top of the mainstack.
- The script can then either drop all of the keys, or send them to the altstack, in order to perform a standard P2PKH signature check.
- A P2PKH signature check is performed, requiring that a key-pair corresponding to the game's betting pot is used to sign the spending transaction.

The result of executing the script is the set of public keys $P_1, P_2, ... , P_N$ is shuffled in-script, and the funds are then locked to a key-pair, controlled by the dealer or the casino, that represents the pot for that hand of poker.

Recap

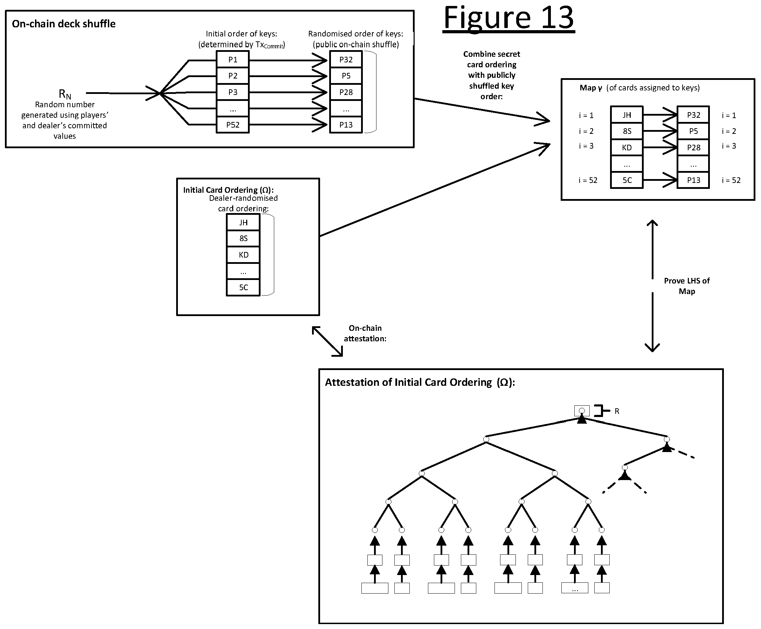

The initialisation process, performed before playing a hand of provably fair poker, is summarised in Figure 13. The key to ensuring provable fairness is to make sure that the map $\gamma$, which is used to assign card elements to key pairs, has:

- A randomly-shuffled *public* order of public keys (RHS of map);
- A *secret* initial ordering of card elements $\Omega$ known only to the dealer; and
- An attestation of the secret initial ordering $\Omega$ to prove card assignments.

**Playing a hand of provably fair poker**

The following describes an example of $N = 5$ players playing a hand of provably fair poker, which uses the techniques described above.

**Step 0: Initialisation of the hand**

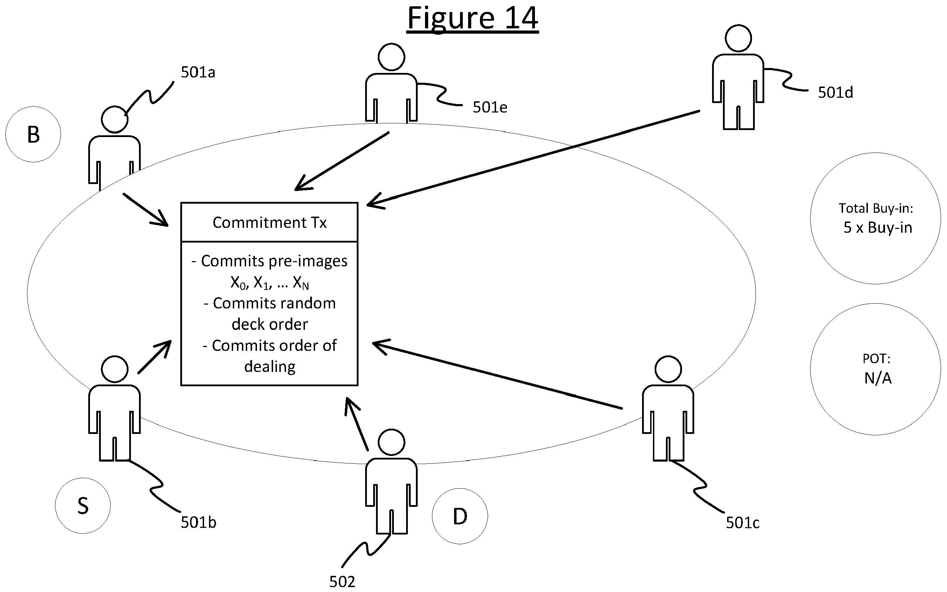

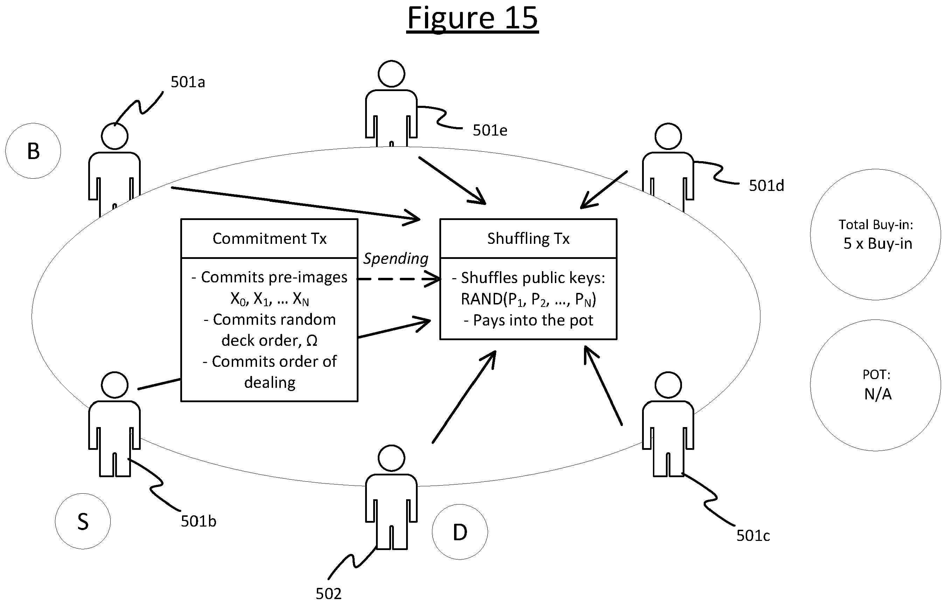

This is the pre-hand initialisation phase, which should carry out all of the steps described in phase 2 above. This is illustrated in Figures 14 and 15.

Summarising at a high level, this involves creation of the commitment transaction $Tx_{Commit}$, creation of a random number $R_N$, and creation of the shuffling transaction $Tx_{shuffle}$ (i.e. the game transaction $Tx_{game}$), which shuffles the order of the public keys. As discussed previously, this is effectively the same as shuffling the cards that each player 501 will be dealt, due to how the map $\gamma$ between card elements and public keys is constructed.

**Step 1: Staking blinds**

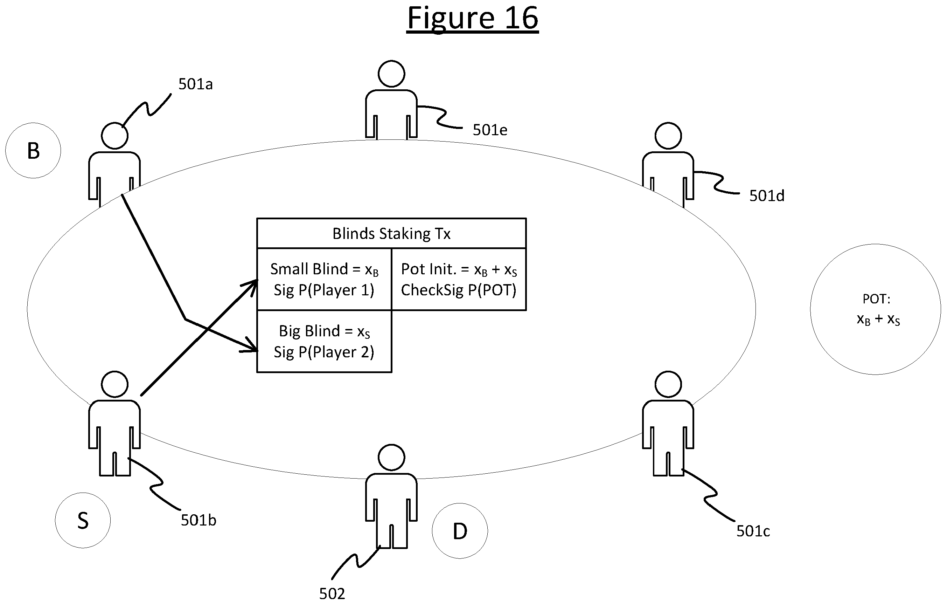

The players who are first and second immediately to the dealer's left are assigned to be the 'small blind' and 'big blind' respectively. They are required to participate in a mandatory betting transaction $Tx_{Blinds}$, which pays the small and big blind values directly into the pot, as shown in Figure 16.

**Step 2: Dealing the hole cards**

The step of dealing each player's face down cards (the "hole" cards) is done simply by the dealer 502 telling each player 501 which two card elements have been mapped to the two public keys they provided during the initialisation of the hand (step 0).

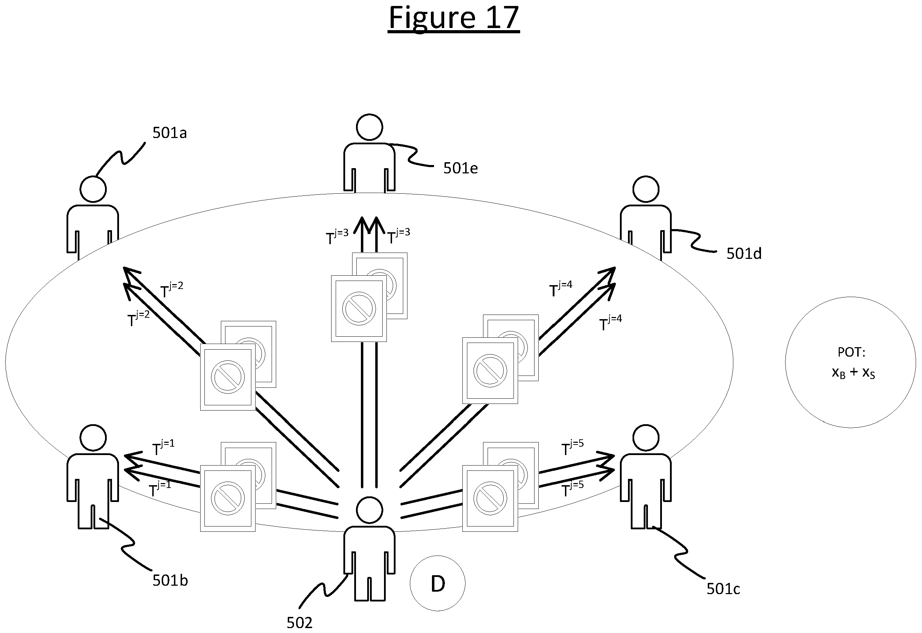

In order to successfully convince each player 501 that the dealer 502 has given them the correct card elements, the dealer 502 must also provide each player 501 with the respective proof tokens for the card elements they have been dealt, which prove what the initial positions of those card elements were in the list of card elements that the dealer 502 originally chose and committed to during the initialisation. This step is illustrated in Figure 17.

**Proving card elements have been dealt fairly:**

Putting the above into other words, it is necessary to prove to a player 501 the card elements assigned to the two public keys they chose in step 0. This means it is necessary to prove to player 1 ($j = 1$) that the public keys he generated $P_1, P_2$ have indeed been assigned the card elements they have been dealt by the dealer 502, which were $AD \rightarrow P_1, 6C \rightarrow P_2$ respectively in the earlier example. The player 501 therefore requires two proof tokens, one for each card element $AD$, $6C$, in order to prove this fact. The tokens are labelled $T^{j=1,1} = T_{AD}$ and $T^{j=1,2} = T_{6C}$ respectively.

However, the proof tokens $T_{AD}$, $T_{6C}$ provided to the player 501 are insufficient on their own to convince player 1 ($j = 1$) that they have been dealt the correct card elements. They will also need the respective Merkle paths for these proof tokens to prove the position of the tokens corresponds to the expected indices ($i$) in the list of card elements.

Recall that player 1 knows also the index positions of his two public keys $P_1, P_2$ in the randomised list of public keys as generated by the shuffling transaction $Tx_{Shuffle}$, since these were *publicly* shuffled. In the earlier example, it was stated that these keys were shuffled to the positions $i = 31$ for $P_1$ and $i = 17$ for $P_2$ respectively.

Given these index positions $i = 31$, $i = 17$ and mappings $AD$, $6C$ for player 1's public keys $P_1$, $P_2$ respectively, the following steps allow player 1 to be convinced that they have been dealt the correct card elements corresponding to their public keys:

1. Obtain the public index of $P_1$, which is $i = 31$.

2. Obtain the card element the dealer claims is mapped to this card, which is $AD$.

3. Obtain the proof token $T^{j=1,1} = T_{AD}$ corresponding to the card element $AD$.

4. Obtain the Merkle path for either $T_{AD}$ or $AD$ (note these will be identical as $T_{AD}$, $AD$ are leaf node partners, and thus have the same Merkle path other than the leaf data itself).

5. Using $T_{AD}$, $AD$ and the Merkle path obtained, perform a Merkle proof. This proof will verify that:

   a. both $T_{AD}$ and $AD$ are part of the set of data elements attested to by the dealer's attestation Merkle root (that was mined in $Tx_{Commit}$); and
   b. $T_{AD}$ and $AD$ are indeed partnered hashes in the attestation Merkle tree.

6. Verify that $T_{AD}$, $AD$ correspond to the $31^{st}$ leaf node pair of the Merkle tree i.e. the $61^{st}$ and $62^{nd}$ leaves of the attestation Merkle tree. This can be done by:

   a. Analysing the structure of the Merkle proof provided in step 5; or
   b. Checking any explicit indices appended to the leaf data (or similar) if an alternative Merkle tree construction was used for the attestation Merkle tree.

7. Repeat steps 1-6 for the second of player 1's public keys, namely $P_2$.

Performing the above steps is equivalent to player 1 validating the mappings of the cards $AD$, $6C$ do indeed correspond to the public keys $P_1$, $P_2$ in the final form of the randomised map $\gamma$.

**Step 3. First betting round (Pre-flop betting)**

Each player's pair of face down cards ("hole" cards) have now been dealt, in a provably random and fair manner, in step 2. The next step is simply the step of constructing a betting transaction for the pre-flop betting round, namely $Tx_{Preflop}$. This transaction is signed by all the players who wish to bet in this round, and any player who 'folds' simply does not sign the transaction. The transaction has one output, which pays the total of the betted funds into the pot.

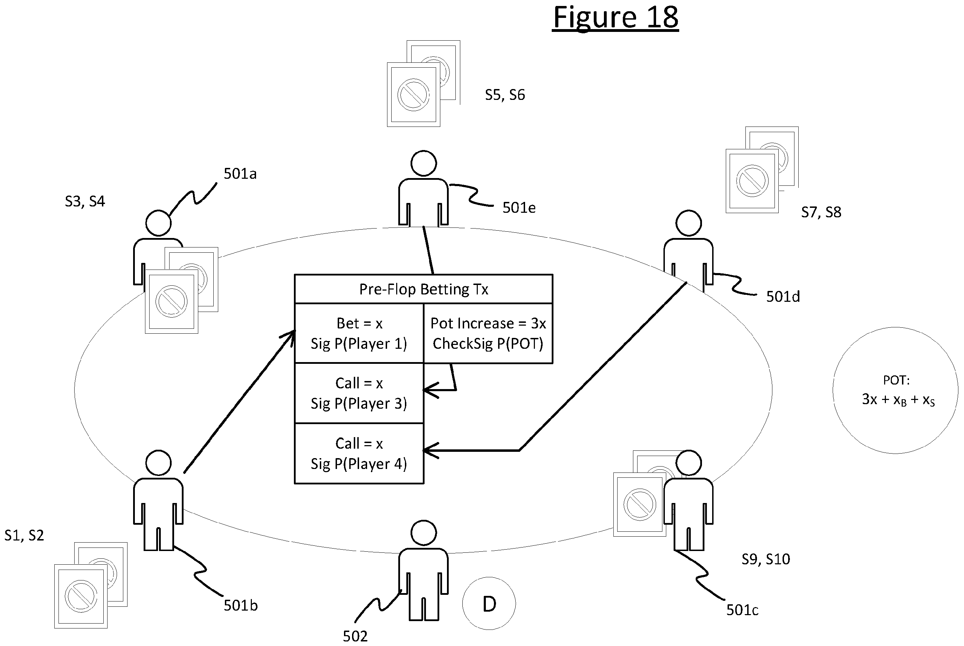

Figure 18 shows the private keys $S_1$, $S_2$, ... , $S_{10}$ corresponding to the players' respective hole card public keys $P_1$, $P_2$, ... , $P_{10}$. This represents the fact that only the player who owns the private key corresponding to a public key, which was assigned a card element in step 2, will be able to sign for their public key.

Also note that, at this point, each player knows only the mappings of card elements to their own public keys, and do not know the mappings of card elements to any other player's public keys, which is consistent with everybody's cards being 'face down' at this point in time. Note also that all public keys are visible, despite the mappings of card elements to them being held privately by the respective players, which is in keeping with the principle that public keys are allowed to be visible at all times, without compromising security.

**Step 4. Dealing the flop**

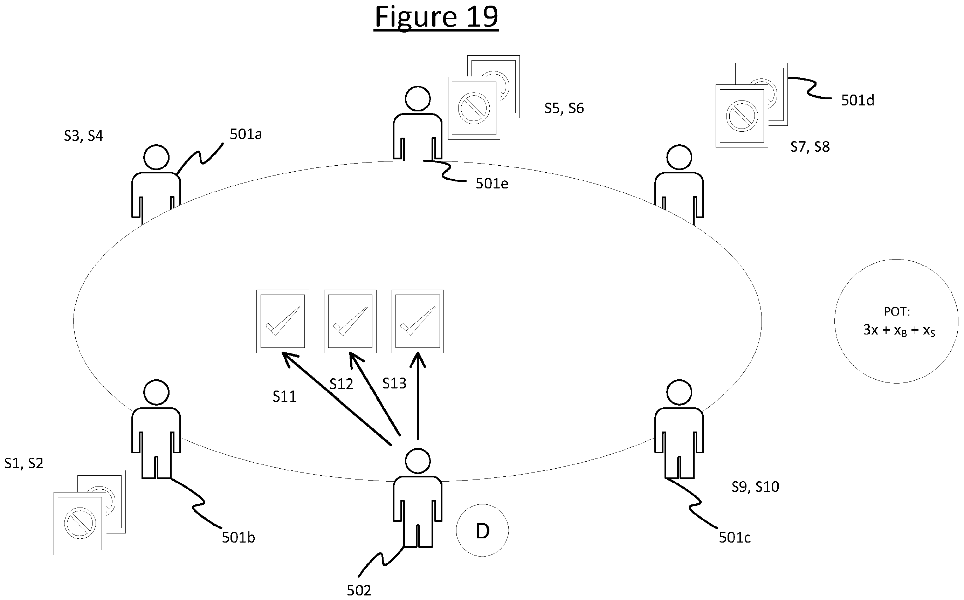

As shown in Figure 19, once the pre-flop betting transaction $Tx_{Preflop}$ has been mined, and all consenting player bets committed to the continuation of the hand, the dealer can now deal the flop cards.

The flop cards are dealt 'face-up', which means that the dealer 502 must publicly provide the attestation (proof) tokens corresponding to the flop cards, along with corresponding Merkle proofs. This allows all players to perform the actions outlined in step 2, which in turn is sufficient to convince all the players on the table that the card elements the dealer has revealed to be mapped to the flop public keys have been mapped legitimately.

The dealer also provides the private keys $S_{11}$, $S_{12}$, $S_{13}$ for the flop cards. This allows each player to later sign a message for the public keys $P_{11}$, $P_{12}$, $P_{13}$. This will become important when constructing a single public key to represent a winning hand, and subsequently locking an output to the winning hand public key. In essence, it is necessary to reveal the private keys for all of the 'community' cards (i.e. cards face up in the middle of the table) to ensure that the winning player can later sign a message for the winning hand private key, which will be constructed from the combination of the community cards and hole cards of the winning player.

For example, if the winning hand comprises three community cards (whose private keys are known to all players on the table) and two hole cards (whose private keys are held by one winning player), then anybody on the table will be able to construct the winning hand public key

.

$$P_{winning\ hand} = P_{Hole\ 1} \oplus P_{Hole\ 2} \oplus P_{Community\ 1} \oplus P_{Community\ 2} \oplus P_{Community\ 3}$$

but only the legitimate winner will be able to construct the winning private key $S_{winning\ hand}$, and redeem an output encumbered to $P_{winning\ hand}$, because only they know the hole private keys:

$$S_{winning\ hand} = \underbrace{S_{Hole\ 1} + S_{Hole\ 2}}_{known\ only\ to\ winner} + \underbrace{S_{Community\ 1} + S_{Community\ 2} + S_{Community\ 3}}_{known\ to\ all\ players}$$

**Step 5. Second betting round (pre-turn)**

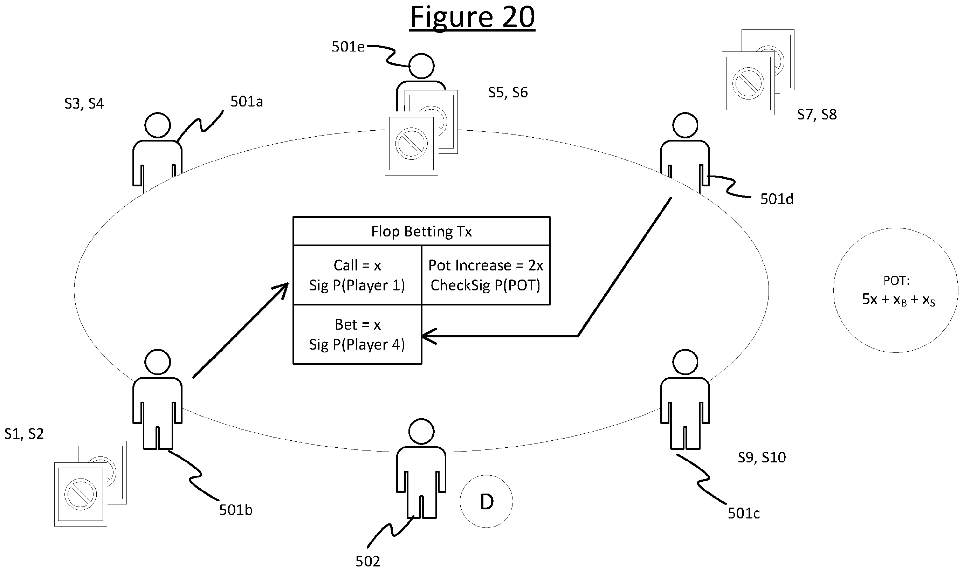

As shown in Figure 20, this step is another betting round, which precedes the dealing of the 'turn' card (the fourth community card). This step follows the same logic and rationale as step 3, and results in the construction of a betting transaction $Tx_{Preturn}$ which pays funds into the pot.

**Step 6. Dealing the turn**

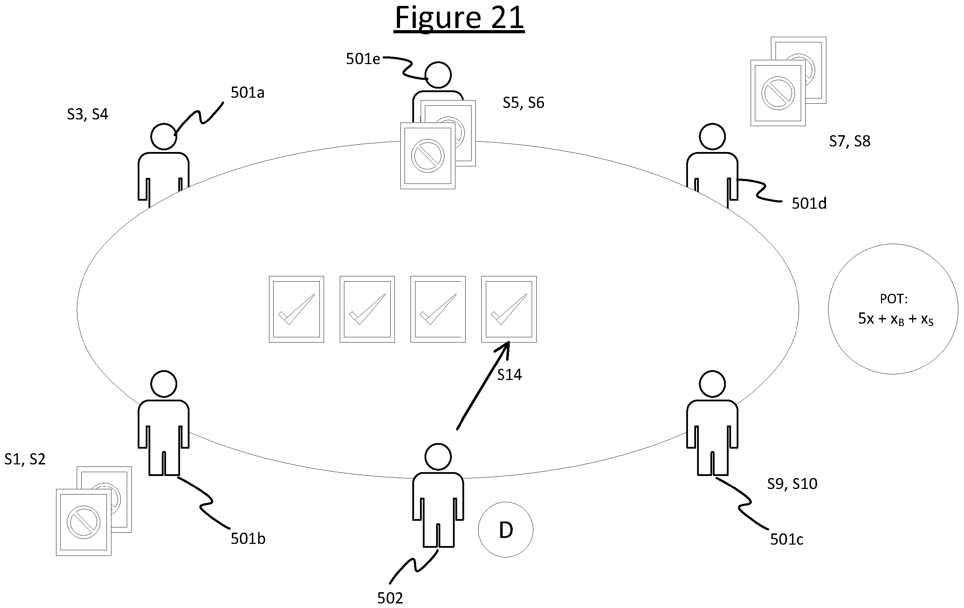

As shown in Figure 21, this step simply involves dealing the 'turn' card, as the fourth face up community card. This step involves the same logic and rationale as step 4, meaning the dealer published the proof token for the turn card, a Merkle proof for the proof token and the private key $S_{14}$ corresponding to the public key for the turn card.

**Step 7. Third betting round (Pre-river)**

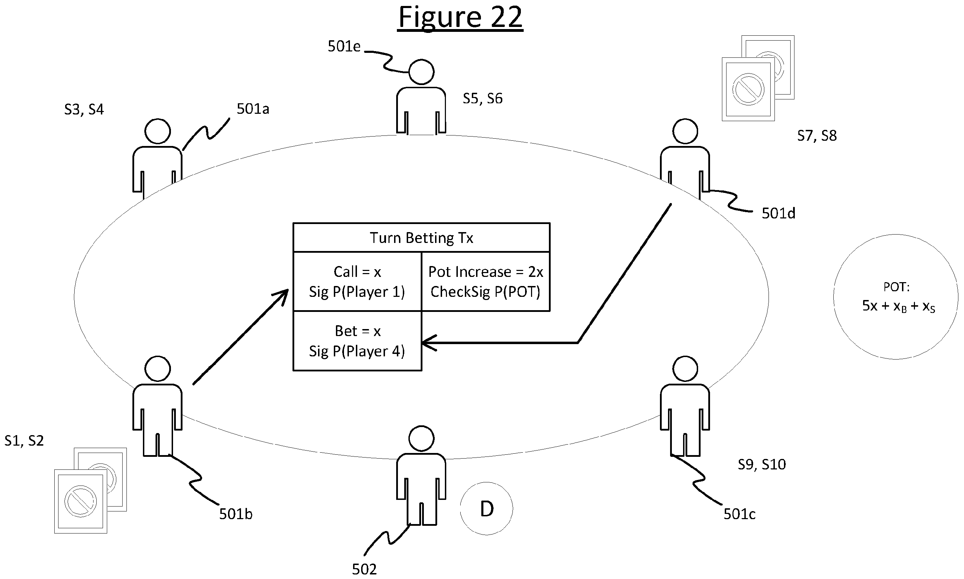

As shown in Figure 22, This step is another betting round, which precedes the dealing of the 'river' card (the fifth community card). This step follows the same logic and rationale as steps 3 and 5, and results in the construction of a betting transaction $Tx_{Preriver}$ which pays funds into the pot.

**Step 8. Dealing the river**

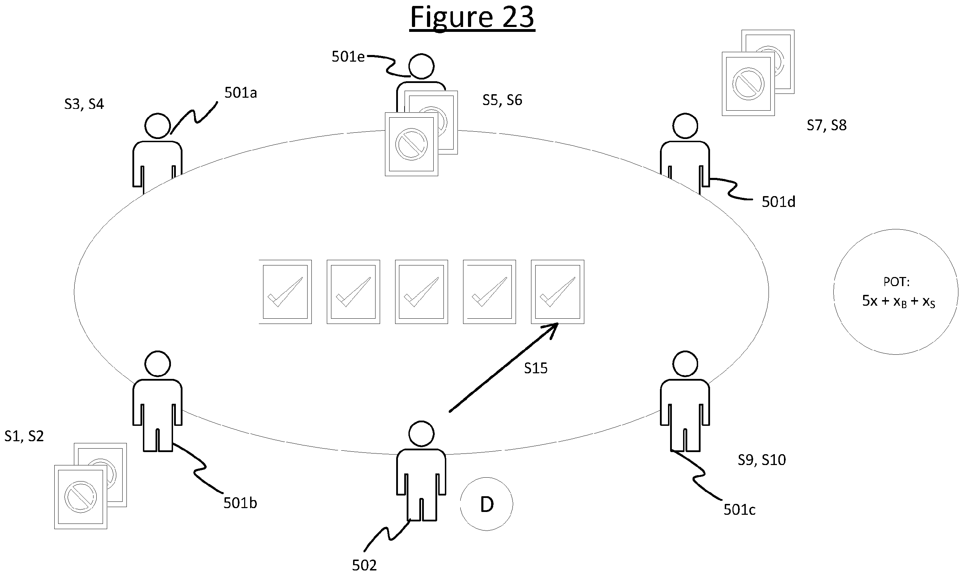

As shown in Figure 23, this step simply involves dealing the 'river' card, as the fifth face up community card. This step involves the same logic and rationale as steps 4 and 6, meaning the dealer published the proof token for the turn card, a Merkle proof for the proof token and the private key $S_{14}$ corresponding to the public key for the turn card.

**Step 9. Fourth (and final) betting round (post-river)**

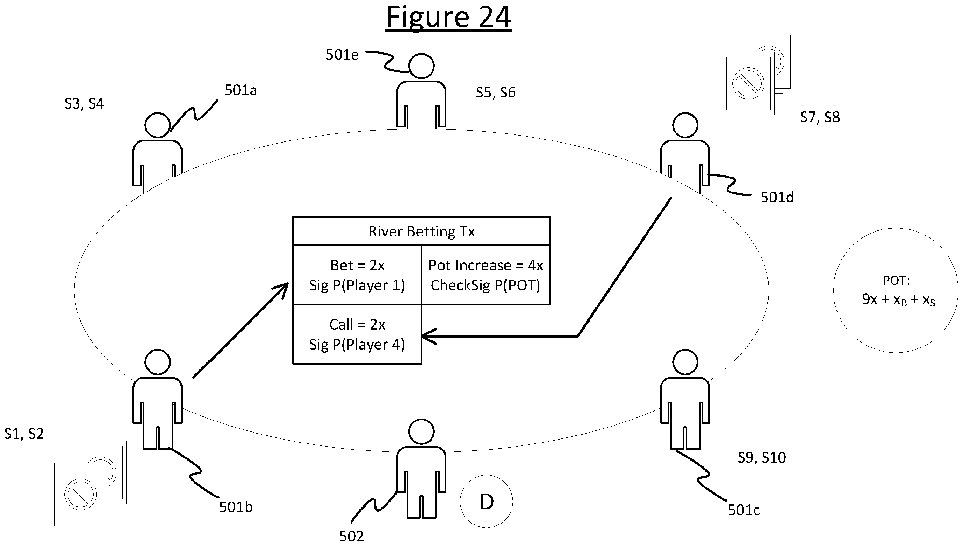

As shown in Figure 24, this step is another betting round, which follows the dealing of the 'river' card (the fifth community card). This step follows the same logic and rationale as steps 3, 5 and 7, and results in the construction of a betting transaction $Tx_{Postriver}$ which pays funds into the pot.

**Step 10. The Showdown**

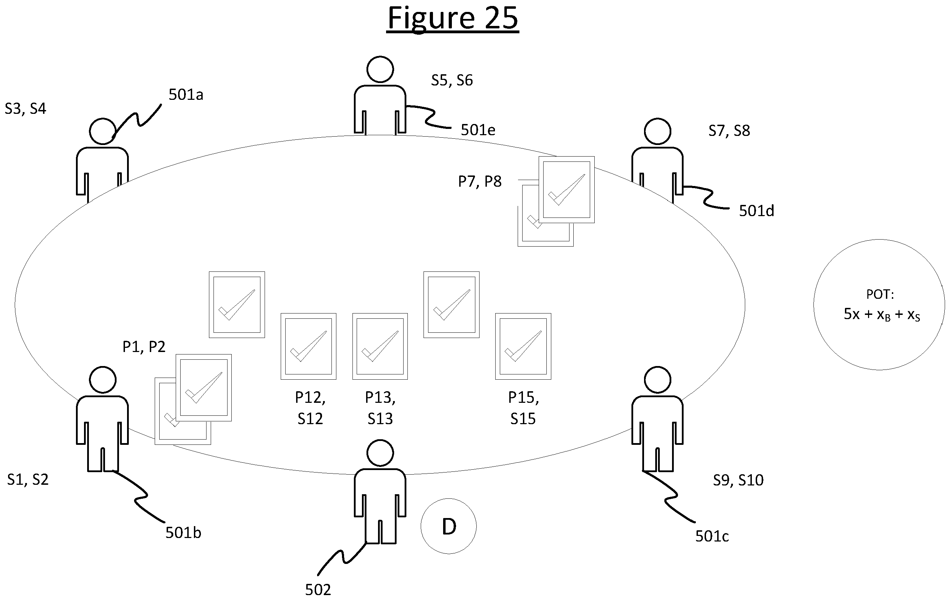

As shown in Figure 25, once all the betting rounds, and their respective transactions, have been committed to the blockchain, the hand of poker may be completed by comparing the strength of the hands of the players who are still in the game (i.e. the players who signed the last betting transaction $Tx_{Postflop}$).

The dealer 502 has already provided proof tokens, and corresponding Merkle proofs, for the mappings of each of the community cards in the middle of the table, which means that all the players 501 are convinced of these mappings already.

All that remains to be done is for the dealer to now *publish* the proof tokens and corresponding Merkle proofs for all the cards that are turned face up in the showdown, which will make the mappings of card elements to the hole cards public and verifiable by all players (including those who have folded).

In the case of the diagram above, this means that the mappings of card elements to the public keys representing the hole cards of player 1 ($j = 1$) and player 4 ($j = 4$) must now be revealed. Note that at no point are the private keys, $S_1$, $S_2$, $S_7$, $S_8$ for these hole cards revealed publicly, as they are known only to the respective players.

**Redemption of winnings:**

It is now possible for the dealer to construct a transaction that sends the entirety of the funds owned by the pot, by aggregating all of the inputs of the respective betting transactions into one winnings redemption transaction. The dealer is also able to construct the winning public key for the hand $P_{win}$, to which the dealer locks the funds in the winnings redemption transaction $Tx_{winnings}$.

$$P_{win} = P_1 \oplus P_2 \oplus P_{12} \oplus P_{13} \oplus P_{15}$$

$$S_{win} = S_1 + S_2 + S_{12} + S_{13} + S_{15}$$

It is highlighted again that the winning public key $P_{win}$ can be constructed by any of the players, but only the winner (player 1 in this case) is able to construct the winning private key $S_{win}$ to redeem the UTXO that has been locked to $P_{win}$, by virtue of creating a valid digital signature using $S_{win}$.

**Resolving a hand without a showdown**

An important aspect of the provably fair $N$-player protocol implementation presented here is that information about the randomised mapping of card elements to keys, by use of the randomised map $\gamma$: *card elements → public keys,* is only revealed as and when required.
In other words, the dealer only reveals the mapping of a card element to a public key:

- When the dealer is dealing hole cards to respective players; or
- When the dealer is dealing community cards publicly to all of the players; or
- When the dealer is required to *publicly* reveal players' respective hole cards in the event of a showdown.

Crucially, this means that the hole cards of players *only* need to be revealed if a showdown is required at the end of a hand of poker.
This means that the dealer can also resolve a particular hand of provably fair $N$-player poker *without* conducting a showdown, and thus without revealing the mappings of card elements to hole cards in a showdown.
This is important as it means the implementation of provably fair $N$-player poker presented here also preserves the information asymmetry required to implement *bluffing,* which is of course an essential aspect of poker.
In other words, it means that a player can win a hand as a result of all other players on the table folding. In this event, the winning player *does not need to reveal* his own hole cards, and thus is able to bluff to a victory by other players folding without giving away whether or not the player was bluffing in the first place.
Using a Merkle tree to attest to the dealer's initial ordering of card elements ensures that any one player's dispute can be resolved *independently* of any other's, without revealing the cards mapped to other players' public keys.
For instance, if player 1 disputes the card he has received from the dealer, the dealer can prove (using a proof token and Merkle proof) that his card has been correctly mapped, without revealing any information about the mappings of card elements to the other players' cards, or indeed any other cards in the deck, whether or not they have been played. This is clearly important because it mitigates any risk of giving away information to one player about the state of the deck of cards that would otherwise give them an unfair advantage over the other players on the table.

**Invoking multiple pots**

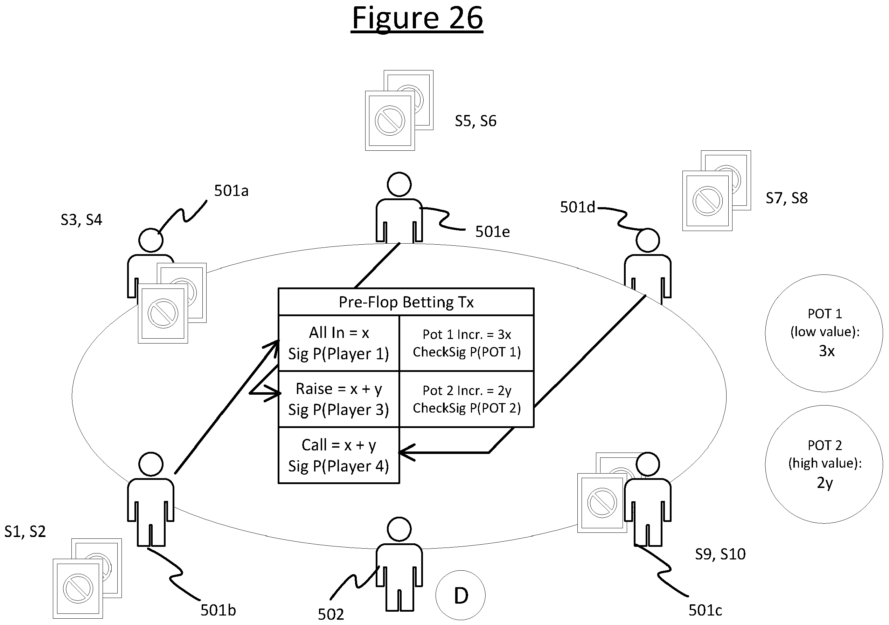

Figure 26 illustrates another aspect of the provably fair $N$-player poker implementation presented herein is that it allows a dealer to keep track of multiple pots by establishing different public keys that correspond to different pots, which in-turn allows us to do multiple useful things.
Firstly, it allows the dealer to delegate the control over the funds in each pot during the hand. In a case where there may be multiple pots of wildly varying total value, one 'low value pot' and one 'high value pot' for instance, this would allow the dealer to delegate control over the high value pot to a more secure system, which might be a special feature accessible to only 'high-rollers'.

**CONCLUSION**

It will be appreciated that the above embodiments have been described by way of example only.

Further examples are provided below.

In some examples, the method may comprise generating a map, wherein the map comprises a mapping of public keys in the list of public keys to game elements in the list of game elements.

In some examples, the method may comprise transmitting the game transaction to one or more of the respective users and/or the blockchain network.

In some examples, the method may comprise obtaining one or more first sets of public keys from the respective users.

In some examples, generating a hash of the list of game elements may comprise generating a merkle tree, wherein at least some of the leaf nodes of the merkle tree comprise a respective one of the game elements.

In some examples, the method may comprise transmitting the commitment transaction to one or more of the respective users and/or the blockchain network.

In some examples, the set of seed data items comprises an oracle seed data item generated by the oracle.

In some examples, the method may comprise taking a modulus of the respective hash result, wherein said total number is the modulus.

In some examples, applying each respective hash function comprises applying a same hash function a different number of times.

In some examples, the commitment transaction comprises a set of inputs, each respective input comprising a hash of a respective one of the set of seed data items.

In some examples, the method may comprise to each respective user, transmitting a merkle path for each game element paired with each proof token transmitted to that respective user.

In some examples, the method may comprise generating a payout transaction, wherein the payout transaction is locked to a winning public key, and wherein the winning public key is generated based on a combination of public keys, each one of the combination of public keys mapped to a respective game element represented by a respective proof token transmitted to at least one of the first set of users.

In some examples, each public key used to generate the combination of public keys is mapped to a game element, rather than the combination itself being mapped to a game element.

In some examples, the game is poker and wherein the game elements represent playing cards.

According to an aspect of the teachings disclosed herein, there may be provided a method comprising the actions of the oracle and each user.

According to an aspect of the teachings disclosed herein, there may be provided a system comprising the computer equipment of the oracle and each user.

Other variants may become apparent to a person skilled in the art once given the disclosure herein. The scope of the present disclosure is not limited by the disclosed embodiments but only by the accompanying claims.

**Claims**

1. A computer-implemented method of pseudo-randomly selecting game elements for use in playing a game, wherein the game is played by a set of users (501), wherein the game elements are used to determine an outcome of the game, and wherein the method is performed by an oracle (502) and comprises:

    obtaining a set of seed data items, wherein the set of seed data items comprises one or more user seed data items generated by a respective user (501);
    obtaining a sequence of public keys;
    obtaining a list of game elements, wherein a total number of public keys corresponds to a total number of game elements; and
    generating a first output of a game transaction, wherein the game transaction is a blockchain transaction, wherein the first output comprises the sequence of public keys, and wherein the output comprises a script configured to generate at least one pseudorandom number, the at least one pseudorandom number being based on the set of seed data items, wherein the script is configured to generate a list of the public keys based on the at least one pseudorandom number, and wherein an order of public keys in the list of public keys differs compared to an order of public keys in the sequence of public keys.

2. The method of claim 1, wherein the output script is configured to generate a plurality of pseudorandom numbers, and to generate the list of public keys based on one, some or all of the plurality of pseudorandom numbers.

3. The method of any preceding claim, wherein the output script is configured to generate the list of public keys by selecting, for each respective pseudorandom number, a public key at a position in the sequence of public keys corresponding to the respective pseudorandom number, and to place the selected public key at a beginning of the list of public keys.

4. The method of any preceding claim, wherein the sequence of public keys comprises one or more first sets of public keys, and wherein at least one of the first sets of public keys is generated by a respective user.

5. The method of claim 4, wherein the sequence of public keys comprises a second set of public keys, and wherein the second set of public keys are generated by the oracle.

6. The method of any preceding claim, comprising:
generating, for each game element in the list of game elements, a respective proof token, wherein the proof token represents a respective position of the game element in the list of game elements.

7. The method of any preceding claim, comprising, generating a hash of the list of game elements, wherein generating the hash of the list of game elements comprises:
generating a merkle tree, the merkle tree comprising a plurality of leaf node pairs, each leaf node pair comprising a first leaf node and a second leaf node, wherein each first leaf node in each leaf node pair is generated by applying a hash function to a respective game element, and wherein each second leaf node of each leaf node pair is generated by applying a hash function to a respective proof token, wherein the first leaf nodes are ordered according to the list of game elements.

8. The method of claim 7, comprising, generating a commitment transaction, wherein the commitment transaction is a blockchain transaction and comprises a root node of the merkle tree.

9. The method of any preceding claim, wherein each respective pseudorandom number is generated by:

applying a respective hash function to a combination of the set of seed data items to generate a respective hash result; and
mapping the respective hash result to a number based on a total number of game elements in the list of game elements.

10. The method of claim 8 and any claim dependent thereon, wherein the commitment transaction comprises the set of seed data items.

11. The method of claim 6 or any claim dependent thereon, comprising:
to each of a first set of the respective users (501), transmitting a respective first set of the proof tokens and an indication of the respective game element at the respective position represented by each of the respective proof tokens.

12. The method of claim 6 or any claim dependent thereon, comprising:

to one or more of the first set of the respective users (501), transmitting one or more second sets of the proof tokens, and an indication of the respective game element at the respective position in the list of game elements represented by each of the respective proof tokens; and
to each of the one or more of the first set of the respective users (501) and for each proof token in the one or more second sets of proof tokens, transmitting one or more sets of private keys, wherein each private key corresponds to a respective public key mapped to the respective game element at the respective position in the list of game elements represented by the respective proof token.

13. A blockchain transaction for inclusion in a blockchain, the transaction comprising:
an output, wherein the first output comprises a sequence of public keys, and wherein the output comprises a script configured to generate at least one pseudorandom number, the at least one first pseudorandom number being based on a set of seed data items, wherein the set of seed data items comprises one or more user (501) seed data items generated by a respective user (501), and wherein the script is configured to generate a list of public keys based on the at least one pseudorandom number to, wherein an order of public keys in the list of public keys differs compared to an order of public keys in the sequence of public keys, and wherein a total number of public keys corresponds to a total number of game elements.

14. Computer equipment comprising:

memory comprising one or more memory units; and
processing apparatus comprising one or more processing units, wherein the memory stores code arranged to
run on the processing apparatus, the code being configured so as when on the processing apparatus to perform
the method of any of claims 1 to 12.

15. A computer program embodied on computer-readable storage and configured so as, when run on computer equipment of claim 14, to perform the method of any of claims 1 to 12.

**Patentansprüche**

1. Computerimplementiertes Verfahren zum pseudozufälligen Auswählen von Spielelementen für die Verwendung beim Spielen eines Spiels, wobei das Spiel durch eine Gruppe von Anwendern (501) gespielt wird, wobei die Spielelemente verwendet werden, um einen Ausgang des Spiels zu bestimmen, und wobei das Verfahren durch ein Orakel (502) ausgeführt wird und Folgendes umfasst:

Erhalten einer Gruppe von Startdatenelementen, wobei die Gruppe von Startdatenelementen ein oder mehrere Anwenderstartdatenelemente umfasst, die durch einen jeweiligen Anwender (501) erzeugt werden;
Erhalten einer Folge öffentlicher Schlüssel (501);
Erhalten einer Liste von Spielelementen, wobei eine Gesamtanzahl öffentlicher Schlüssel einer Gesamtanzahl von Spielelementen entspricht; und
Erzeugen einer ersten Ausgabe einer Spieltransaktion, wobei die Spieltransaktion eine Blockchain-Transaktion ist, wobei die erste Ausgabe die Folge öffentlicher Schlüssel umfasst und wobei die Ausgabe ein Skript umfasst, das konfiguriert ist, mindestens eine pseudozufällige Zahl zu erzeugen, wobei die mindestens eine pseudozufällige Zahl auf der Gruppe von Startdatenelementen beruht, wobei das Skript konfiguriert ist, eine Liste der öffentlichen Schlüssel anhand der mindestens einen pseudozufälligen Zahl zu erzeugen, und wobei eine Reihenfolge öffentlicher Schlüssel in der Liste öffentlicher Schlüssel im Vergleich zu einer Reihenfolge öffentlicher Schlüssel in der Folge öffentlicher Schlüssel verschieden ist.

2. Verfahren nach Anspruch 1, wobei das Ausgabeskript konfiguriert ist, mehrere pseudozufällige Zahlen zu erzeugen und die Liste öffentlicher Schlüssel anhand einer, einiger oder aller der mehreren pseudozufälligen Zahlen zu erzeugen.

3. Verfahren nach einem vorhergehenden Anspruch, wobei das Ausgabeskript konfiguriert ist, die Liste öffentlicher Schlüssel durch Auswählen für jede jeweilige pseudozufällige Zahl eines öffentlichen Schlüssels an einer Position in der Folge öffentlicher Schlüssel, die der jeweiligen pseudozufälligen Zahl entspricht, zu erzeugen und den ausgewählten öffentlichen Schlüssel an einen Anfang der Liste öffentlicher Schlüssel zu setzen.

4. Verfahren nach einem vorhergehenden Anspruch, wobei die Folge öffentlicher Schlüssel eine oder mehrere erste Gruppen öffentlicher Schlüssel umfasst und wobei mindestens eine der ersten Gruppe öffentlicher Schlüssel durch einen jeweiligen Anwender erzeugt wird.

5. Verfahren nach Anspruch 4, wobei die Folge öffentlicher Schlüssel eine zweite Gruppe öffentlicher Schlüssel umfasst und wobei die zweite Gruppe öffentlicher Schlüssel durch das Orakel erzeugt wird.

6. Verfahren nach einem vorhergehenden Anspruch, das Folgendes umfasst:
Erzeugen für jedes Spielelement in der Liste von Spielelementen eines jeweiligen Beweiszeichens, wobei das Beweiszeichen eine jeweilige Position des Spielelements in der Liste von Spielelementen repräsentiert.

7. Verfahren nach einem vorhergehenden Anspruch, das umfasst, einen Hash der Liste von Spielelementen zu erzeugen, wobei das Erzeugen des Hash der Liste von Spielelementen Folgendes umfasst:
Erzeugen eines Hash-Baums, wobei der Hash-Baum mehrere Blattknotenpaare umfasst, wobei jedes Blattknotenpaar einen ersten Blattknoten und einen zweiten Blattknoten umfasst, wobei jeder erste Blattknoten in jedem Blattknotenpaar durch Anwenden einer Hash-Funktion auf ein jeweiliges Spielelement gebildet wird und wobei jeder zweite Blattknoten des Blattknotenpaars durch Anwenden einer Hash-Funktion auf ein jeweiliges Beweiszeichen erzeugt wird, wobei die ersten Blattknoten gemäß der Liste von Spielelementen geordnet sind.

8. Verfahren nach Anspruch 7, das umfasst, eine Verpflichtungstransaktion zu erzeugen, wobei die Verpflichtungstransaktion eine Blockchain-Transaktion ist und einen Stammknoten des Hash-Baums umfasst.

9. Verfahren nach einem vorhergehenden Anspruch, wobei jede jeweilige pseudozufällige Zahl erzeugt wird durch:

Anwenden einer jeweiligen Hash-Funktion auf eine Kombination der Gruppe von Startdatenelementen, um ein jeweiliges Hash-Ergebnis zu erzeugen; und
Abbilden des jeweiligen Hash-Ergebnisses auf eine Zahl anhand einer Gesamtanzahl von Spielelementen in der Liste von Spielelementen.

10. Verfahren nach Anspruch 8 und einem davon abhängigen Anspruch, wobei die Verpflichtungstransaktion die Gruppe von Startdatenelementen umfasst.

11. Verfahren nach Anspruch 6 oder einem davon abhängigen Anspruch, das Folgendes umfasst:
an jeden einer ersten Gruppe der jeweiligen Anwender (501) Senden einer jeweiligen ersten Gruppe der Beweiszeichen und einer Angabe des jeweiligen Spielelements an der jeweiligen Position, die durch jedes der jeweiligen Beweiszeichen repräsentiert wird.

12. Verfahren nach Anspruch 6 oder einem davon abhängigen Anspruch, das Folgendes umfasst:

an einen oder mehrere der ersten Gruppe der jeweiligen Anwender (501) Senden einer oder mehrerer zweiter Gruppen der Beweiszeichen und einer Angabe des jeweiligen Spielelements an der jeweiligen Position in der Liste von Spielelementen, die durch jedes der jeweiligen Beweiszeichen repräsentiert wird; und
an jeden des einen oder der mehreren der ersten Gruppe der jeweiligen Anwender (501) und für jedes Beweiszeichen in der einen oder den mehreren Gruppen von Beweiszeichen Senden einer oder mehrerer Gruppen privater Schlüssel, wobei jeder private Schlüssel einem jeweiligen öffentlichen Schlüssel entspricht, der auf das jeweilige Spielelement an der jeweiligen Position in der Liste von Spielelementen, die durch das jeweilige Beweiszeichen repräsentiert werden, abgebildet ist.

13. Blockchain-Transaktion für die Aufnahme in eine Blockchain, wobei die Transaktion Folgendes umfasst:
eine Ausgabe, wobei die erste Ausgabe eine Folge öffentlicher Schlüssel umfasst und wobei die Ausgabe ein Skript umfasst, das konfiguriert ist, mindestens eine pseudozufällige Zahl zu erzeugen, wobei die mindestens eine pseudozufällige Zahl auf einer Gruppe von Startdatenelementen beruht, wobei die Gruppe von Startdatenelementen ein oder mehrere Anwenderstartdatenelemente (501) umfasst, die durch einen jeweiligen Anwender (501) erzeugt werden, und wobei das Skript konfiguriert ist, eine Liste öffentlicher Schlüssel anhand der mindestens einen pseudozufälligen Zahl zu erzeugen, wobei eine Reihenfolge der öffentlichen Schlüssel in der Liste öffentlicher Schlüssel im Vergleich zu einer Reihenfolge öffentlicher Schlüssel in der Folge öffentlicher Schlüssel verschieden ist und wobei eine Gesamtanzahl öffentlicher Schlüssel einer Gesamtanzahl von Spielelementen entspricht.

14. Computerausstattung, die Folgendes umfasst:

einen Speicher, der eine oder mehrere Speichereinheiten umfasst; und
eine Verarbeitungsvorrichtung, die eine oder mehrere Verarbeitungseinheiten umfasst, wobei der Speicher Code speichert, der ausgelegt ist, auf der Verarbeitungsvorrichtung zu laufen, wobei der Code so konfiguriert ist, dass er, wenn er auf der Verarbeitungsvorrichtung ist, das Verfahren nach einem der Ansprüche 1 bis 12 ausführt.

15. Computerprogramm, das auf einem computerlesbaren Speicher enthalten ist und so konfiguriert ist, dass es dann, wenn es auf einer Computerausstattung nach Anspruch 14 läuft, das Verfahren nach einem der Ansprüche 1 bis 12 ausführt.

**Revendications**

1. Procédé mis en œuvre par ordinateur de sélection pseudo-aléatoire d'éléments de jeu à utiliser pour jouer à un jeu, où le jeu est joué par un ensemble d'utilisateurs (501), où les éléments de jeu sont utilisés pour déterminer un résultat du jeu, et où le procédé est exécuté par un oracle (502) et comprend les étapes suivantes :

obtenir un ensemble d'éléments de données de départ, où l'ensemble d'éléments de données de départ comprend un ou plusieurs éléments de données de départ d'utilisateur générés par un utilisateur respectif (501) ;
obtenir une séquence de clés publiques ;
obtenir une liste d'éléments de jeu, où le nombre total de clés publiques correspond au nombre total d'éléments de jeu ; et
générer une première sortie d'une transaction de jeu, où la transaction de jeu est une transaction de chaîne de blocs, où la première sortie comprend la séquence de clés publiques, et où la sortie comprend un script configuré pour générer au moins un nombre pseudo-aléatoire, l'au moins un nombre pseudo-aléatoire étant basé sur l'ensemble des éléments de données de départ, où le script est configuré pour générer une liste de clés publiques basée sur l'au moins un nombre pseudo-aléatoire, et où un ordre de clés publiques dans la liste de clés publiques diffère par rapport à un ordre de clés publiques dans la séquence de clés publiques.

2. Procédé selon la revendication 1, dans lequel le script de sortie est configuré pour générer une pluralité de nombres pseudo-aléatoires, et pour générer la liste de clés publiques sur la base d'un, de certains ou de tous les nombres pseudo-aléatoires de la pluralité de nombres pseudo-aléatoires.

3. Procédé selon l'une quelconque des revendications précédentes, dans lequel le script de sortie est configuré pour générer la liste des clés publiques en sélectionnant, pour chaque nombre pseudo-aléatoire respectif, une clé publique à une position dans la séquence de clés publiques correspondant au nombre pseudo-aléatoire respectif, et pour placer la clé publique sélectionnée à un début de la liste des clés publiques.

4. Procédé selon l'une quelconque des revendications précédentes, dans lequel la séquence de clés publiques comprend un ou plusieurs premiers ensembles de clés publiques, et où au moins un des premiers ensembles de clés publiques est généré par un utilisateur respectif.

5. Procédé selon la revendication 4, dans lequel la séquence de clés publiques comprend un deuxième jeu de clés publiques, et où le deuxième jeu de clés publiques est généré par l'oracle.

6. Procédé selon l'une quelconque des revendications précédentes, comprenant l'étape suivante :
générer, pour chaque élément de jeu de la liste des éléments de jeu, un jeton de preuve respectif, le jeton de preuve représentant une position respective de l'élément de jeu dans la liste des éléments de jeu.

7. Procédé selon l'une quelconque des revendications précédentes, comprenant de générer un hachage de la liste des éléments de jeu, où la génération du hachage de la liste des éléments de jeu comprend les étapes suivantes :
générer un arbre de Merkle, l'arbre de Merkle comprenant une pluralité de paires de noeuds feuilles, chaque paire de noeuds feuilles comprenant un premier noeud feuille et un deuxième noeud feuille, où chaque premier noeud feuille dans chaque paire de noeuds feuilles est généré en appliquant une fonction de hachage à un élément de jeu respectif, et où chaque deuxième noeud feuille de chaque paire de noeuds feuilles est généré en appliquant une fonction de hachage à un jeton de preuve respectif, où les premiers noeuds feuilles sont ordonnés conformément à la liste des éléments de jeu.

8. Procédé selon la revendication 7, comprenant de générer une transaction d'engagement, où la transaction d'engagement est une transaction de chaîne de blocs et comprend un noeud racine de l'arbre de Merkle.

9. Procédé selon l'une quelconque des revendications précédentes, dans lequel chaque nombre pseudo-aléatoire respectif est généré :

en appliquant une fonction de hachage respective à une combinaison de l'ensemble des éléments de données de départ pour générer un résultat de hachage respectif ; et
en faisant correspondre le résultat de hachage respectif à un nombre basé sur le nombre total d'éléments de jeu dans la liste des éléments de jeu.

10. Procédé selon la revendication 8 et toute revendication en dépendant, dans lequel la transaction d'engagement comprend l'ensemble d'éléments de données de départ.

**11.** Procédé selon la revendication 6 ou toute revendication en dépendant, le procédé comprenant l'étape suivante :
à chacun d'un premier ensemble d'utilisateurs respectifs (501), transmettre un premier ensemble respectif de jetons de preuve et une indication de l'élément de jeu respectif à la position respective représentée par chacun des jetons de preuve respectifs.

**12.** Procédé selon la revendication 6 ou toute revendication en dépendant, le procédé comprenant les étapes suivantes :

à un ou plusieurs du premier ensemble d'utilisateurs respectifs (501), transmettre un ou plusieurs deuxièmes jeux de jetons de preuve et une indication de l'élément de jeu respectif à la position respective dans la liste des éléments de jeu représentés par chacun des jetons de preuve respectifs ; et
à chacun des un ou plusieurs utilisateurs du premier ensemble d'utilisateurs respectifs (501) et pour chaque jeton de preuve des un ou plusieurs deuxièmes ensembles de jetons de preuve, transmettre un ou plusieurs ensembles de clés privées, chaque clé privée correspondant à une clé publique respective mise en correspondance avec l'élément de jeu respectif à la position respective dans la liste des éléments de jeu représentés par le jeton de preuve respectif.

**13.** Transaction de chaîne de blocs à inclure dans une chaîne de blocs, la transaction comprenant :
une sortie, où la première sortie comprend une séquence de clés publiques, et où la sortie comprend un script configuré pour générer au moins un nombre pseudo-aléatoire, l'au moins un premier nombre pseudo-aléatoire étant basé sur un ensemble d'éléments de données de départ, où l'ensemble d'éléments de données de départ comprend un ou plusieurs éléments de données de départ d'utilisateurs (501) générés par un utilisateur respectif (501), et où le script est configuré pour générer une liste de clés publiques sur la base de l'au moins un nombre pseudo-aléatoire, où l'ordre des clés publiques dans la liste de clés publiques diffère de l'ordre des clés publiques dans la séquence de clés publiques, et où un nombre total de clés publiques correspond à un nombre total d'éléments de jeu.

**14.** Matériel informatique comprenant :

une mémoire comprenant une ou plusieurs unités de mémoire ; et
un appareil de traitement comprenant une ou plusieurs unités de traitement, où la mémoire stocke un code conçu pour être exécuté sur l'appareil de traitement, le code étant configuré de manière à exécuter le procédé de l'une quelconque des revendications 1 à 12 lorsqu'il est exécuté sur l'appareil de traitement.

**15.** Programme informatique incorporé dans une mémoire lisible par ordinateur et configuré de telle sorte que, lorsqu'il est exécuté sur l'équipement informatique de la revendication 14, il exécute le procédé de l'une quelconque des revendications 1 à 12.

# Figure 1

# Figure 2

152i

202 $Tx_0$ 201

| $TxID_0$ | |
|---|---|
| **Input(s)** | **Output(s)** |
| **Input** | $\underline{UTXO_0}$ |
| • Pointer to previous $Tx$<br>• Index of $UTXO$ in previous $Tx$<br>• Unlocking script for unlocking from previous party | • Amount<br>• Locking script locking to Alice |
| ⋮<br>Optional further inputs<br>⋮ | ⋮<br><br>Optional further $UTXOs$<br>⋮ |

203

152j

$Tx_1$ 201 203

| $TxID_1$ | |
|---|---|
| **Input(s)** | **Output(s)** |
| **Input** | $\underline{UTXO_1}$ |
| • Pointer to $Tx_0$<br>• Index of $UTXO_0$ [within $Tx_0$]<br>• Unlocking script for unlocking $UTXO_0$ from Alice | • Amount<br>• Locking script locking to Bob |
| ⋮<br>Optional further inputs<br>⋮ | ⋮<br><br>Optional further $UTXOs$<br>⋮ |

202

Transaction
from Alice to Bob

Validated by running: Alice's locking script (from output of $Tx_0$), together with Alice's unlocking script (as input to $Tx_1$). This checks that $Tx_1$ meets the condition(s) defined in Alice's locking script.

# Figure 3

# Figure 4

# Figure 5

501a
501b
501c

User 1

User 2

User 3

$Tx_{redeem}$

*User 1
seed*

*User 2
seed*

*User 3
seed*

Game Oracle

502

$Tx_{game}$

$Tx_{commit}$

106

# Figure 6

501

P1

P2

P3

...

P52

2N generated by N players

M= 52 - 2N generated by dealer

502

# Figure 7

502

H(X₀)

P₁, P₂
H(X₁)

H(X₂)

H(X₃)

H(X₄)

501

| Commitment Tx | | |
|---|---|---|
| Commitment: H(X₀) Sig P₀ | OP_RETURN H(O_D) = Merk. root P₅₂₋₂ₙ, ..., P₅₂ | |
| Commitment: H(X₁) Sig P₃, P₄ | | |
| Commitment: H(X₂) Sig P₅, P₆ | CHECKSIG P(BUY YOUR CHIPS) | |
| Commitment: H(X₃) Sig P₇, P₈ | | |
| Commitment: H(X₄) Sig P₃, P₄ | | |
| Sig P₀ | | |

☐ = SIGHASH ALL | ANYONCEANPAY

▨ = SIGHASH ALL

# Figure 8

**Map γ** (cards assigned to keys)

Ω:

Figure 9

# Figure 10

**Map γ** (of cards assigned to keys)

| | | | |
|---|---|---|---|
| i = 1 | JH → P32 | | i = 1 |
| | ... → ... | | |
| i = 17 | 6C → P2 | | i = 17 |
| | ... | ... | |
| i = 31 | AD → P1 | | i = 31 |
| | ... | ... | |
| i = 52 | 5C | P13 | i = 52 |

# Figure 11

Map γ (initial state)

Private Information: i = 1: JH, i = 2: 8S, i = 3: KD, ..., i = 52: 5C — Fixed

Public Information: i = 1: P1, i = 2: P2, i = 3: P3, ..., i = 52: P52 — Determined by $Tx_{Commit}$

$R_N$

Map γ (final, randomised state)

Private Information: i = 1: JH, i = 2: 8S, i = 3: KD, ..., i = 52: 5C — Fixed

Public Information: i = 1: P32, i = 2: P5, i = 3: P28, ..., i = 52: P13 — Randomised by $R_N$

EP 4 046 329 B1

# Figure 12

# Figure 13

**On-chain deck shuffle**

Initial order of keys:
(determined by Tx_Commit)

Randomised order of keys:
(public on-chain shuffle)

$R_N$
Random number
generated using players'
and dealer's committed
values

| P1 |
| P2 |
| P3 |
| ... |
| P52 |

| P32 |
| P5 |
| P28 |
| ... |
| P13 |

**Combine secret
card ordering
with publicly
shuffled key
order:**

**Map γ** (of cards assigned to keys)

| i = 1 | JH | | P32 | i = 1 |
| i = 2 | 8S | | P5 | i = 2 |
| i = 3 | KD | | P28 | i = 3 |
| | ... | | ... | |
| i = 52 | 5C | | P13 | i = 52 |

**Initial Card Ordering (Ω):**
Dealer-randomised
card ordering:

| JH |
| 8S |
| KD |
| ... |
| 5C |

**On-chain
attestation:**

**Prove LHS of
Map**

**Attestation of Initial Card Ordering (Ω):**

R

EP 4 046 329 B1

49

Figure 14

501a

501e

501d

B

Total Buy-in:
5 x Buy-in

Commitment Tx

- Commits pre-images
$X_0, X_1, ... X_N$
- Commits random
deck order
- Commits order of
dealing

POT:
N/A

S

501b

D

502

501c

EP 4 046 329 B1

# Figure 15

B

501a

501e

501d

Total Buy-in:
5 x Buy-in

**Commitment Tx**

- Commits pre-images $X_0, X_1, ... X_N$
- Commits random deck order, $\Omega$
- Commits order of dealing

*Spending*

**Shuffling Tx**

- Shuffles public keys: $RAND(P_1, P_2, ..., P_N)$
- Pays into the pot

POT:
N/A

S

501b

502

D

501c

EP 4 046 329 B1

# Figure 16

# Figure 17

## Figure 18

# Figure 19

S3, S4  501a

S5, S6  501d

S7, S8  501e

S1, S2  501b

S11  S12  S13

S9, S10  501c

502  D

POT:
$3x + x_B + x_S$

EP 4 046 329 B1

Figure 20

Flop Betting Tx

| Call = x<br>Sig P(Player 1) | Pot Increase = 2x<br>CheckSig P(POT) |
|---|---|
| Bet = x<br>Sig P(Player 4) | |

POT:
$5x + x_B + x_S$

# Figure 21

EP 4 046 329 B1

## Figure 22

EP 4 046 329 B1

Figure 23

Figure 24

# Figure 25

EP 4 046 329 B1

Figure 26

EP 4 046 329 B1

| Table 1: Script to generate random number $<R_N>$ | | |
|---|---|---|
| **Stack** | **Script** | **Description** |
| empty | $<s'_1> <s'_2> … <s'_N>$ OP_ADD OP_ADD … OP_ADD OP_HASH256 $<N>$ OP_MOD | |
| $<s'_1> <s'_2> … <s'_N>$ | OP_ADD OP_ADD … OP_ADD OP_HASH256 $<N>$ OP_MOD | Constants are added to the stack |
| $<s'_1> <s'_2> … <s'_{N-1} + s'_N>$ | OP_ADD … OP_ADD OP_HASH256 $<N>$ OP_MOD | Top two values on stack added |
| $<s'_1> <s'_2> … <s'_{N-2} + s'_{N-1} + s'_N>$ | … OP_ADD OP_HASH256 $<N>$ OP_MOD | Top two values on stack added |
| $<\sum_i s'_i>$ | OP_HASH256 $<N>$ OP_MOD | Repeated addition of top two values |
| $<H(\sum_i s'_i)>$ | $<N>$ OP_MOD | Top value hashed twice with SHA-256 |
| $<H(\sum_i s'_i)> <N>$ | OP_MOD | Constants are added to the stack |
| $<R_N>$ | empty | Remainder of 2$^{nd}$ value divided by 1$^{st}$ value computed; a random number |

## Table 2: Script to spend funds encumbered by the Oracle transaction

| AltStack | Stack | Script | Description |
|---|---|---|---|
| empty | empty | $<Sig\ P_w>$ OP_TOALTSTACK $<P_1>$ $<P_2>$ ... $<P_N>$ $<R_N>$ OP_ROLL OP_TOALTSTACK OP_DROP ... OP_DROP OP_FROMALTSTACK OP_FROMALTSTACK OP_SWAP OP_CHECKSIG | |
| | $<Sig\ P_w>$ | OP_TOALTSTACK $<P_1>$ $<P_2>$ ... $<P_N>$ $<R_N>$ OP_ROLL OP_TOALTSTACK OP_DROP ... OP_DROP OP_FROMALTSTACK OP_FROMALTSTACK OP_SWAP OP_CHECKSIG | Constants are added to the stack |
| $<Sig\ P_w>$ | $<P_1>$ $<P_2>$ ... $<P_N>$ $<R_N>$ | OP_ROLL OP_TOALTSTACK OP_DROP ... OP_DROP OP_FROMALTSTACK OP_FROMALTSTACK OP_SWAP OP_CHECKSIG | Winning signature (WSG) moved to altstack |
| $<Sig\ P_w>$ | $<P_1>$ ... $<P_N>$ $<P_w>$ | OP_TOALTSTACK OP_DROP ... OP_DROP OP_FROMALTSTACK OP_FROMALTSTACK OP_SWAP OP_CHECKSIG | Winning public key (WPK) moved to top of stack |
| $<Sig\ P_w>$ $<P_w>$ | $<P_1>$ ... $<P_N>$ | OP_DROP ... OP_DROP OP_FROMALTSTACK OP_FROMALTSTACK OP_SWAP OP_CHECKSIG | WPK moved to altstack |
| $<Sig\ P_w>$ $<P_w>$ | empty | OP_FROMALTSTACK OP_FROMALTSTACK OP_SWAP OP_CHECKSIG | Remaining $N$-1 public keys dropped from stack |
| $<Sig\ P_w>$ | $<P_w>$ | OP_FROMALTSTACK OP_SWAP OP_CHECKSIG | WPK moved back to stack |
| empty | $<P_w>$ $<Sig\ P_w>$ | OP_SWAP | WSG moved back to stack |
| | $<Sig\ P_w>$ $<P_w>$ | OP_CHECKSIG | Winning signature checked |
| | TRUE | empty | |

EP 4 046 329 B1

Figure 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019130698 A1, J. Simons

**Non-patent literature cited in the description**

- **Z. JIA et al.** *DeLottery: A Novel Decentralized Lottery System Based on Blockchain Technology*
- **A. CHERNYAEVA et al.** *Game Channels: State Channels for the Gambling Industry with Built-In PRNG*
- **D. LIAO et al.** *Design of a Blockchain-Based Lottery System for Smart Cities Applications*